# EUROPEAN PATENT APPLICATION

(11) **EP 4 726 527 A1**
(43) Date of publication of application: **15.04.2026**
(21) Application number: 24864310.8
(22) Date of filing: 01.08.2024
(51) Int. Cl.: G06F 3/14, G06F 1/3231

(54) **ALWAYS-ON DISPLAY METHOD AND RELATED APPARATUS**

(30) Priority: 11.09.2023 CN 202311171236
(71) Applicant: Honor Device Co., Ltd., Shenzhen, Guangdong 518040 (CN)
(72) Inventor: WANG, Yuanyuan, Shenzhen, Guangdong 518040 (CN); HUANG, Liwei, Shenzhen, Guangdong 518040 (CN); YANG, Yuanyuan, Shenzhen, Guangdong 518040 (CN); WANG, Xiaofei, Shenzhen, Guangdong 518040 (CN)
(74) Representative: Goddar, Heinz J.
(86) International application number: PCT/CN2024/109170
(87) International publication number: WO 2025/055587

(57) **Abstract**

This application provides an always on display method and a related apparatus. In the method, when the electronic device is in a screen-doze state, it may be first determined whether the electronic device is in a folded state and then determined whether a condition for displaying an AOD interface is satisfied, such as recognizing a human face or a human eye, or the like, and may determine a screen displaying an AOD interface. In this way, the AOD interface can be better displayed based on a user requirement.

## Description

This application claims priority to Chinese Patent Application No. 202311171236.7, filed with the China National Intellectual Property Administration on September 11, 2023 and entitled "ALWAYS ON DISPLAY METHOD AND RELATED APPARATUS", which is incorporated herein by reference in its entirety.

### TECHNICAL FIELD

This application relates to the field of computers, and in particular, to an always on display method and a related apparatus.

### BACKGROUND

An electronic device can display some information in a screen-doze state, and a user can directly view the displayed information. For an outward-foldable electronic device (including a main screen and a rear screen), how to display information when the outward-foldable electronic device is in different states and a screen of the outward-foldable electronic device dozes is an urgent problem to be resolved by a person skilled in the art.

### SUMMARY

Embodiments of this application provide an always on display method and a related apparatus, to determine a screen displaying an AOD interface. In this way, the AOD interface can be better displayed based on a user requirement.

According to a first aspect, an embodiment of this application provides an always on display method. The method is applied to an electronic device. The electronic device includes a main screen, a rear screen, a main screen camera, and a rear screen camera. The main screen is connected to the rear screen via a folding member, an orientation of the main screen camera is the same as an orientation of the main screen, and an orientation of the rear screen camera is opposite to the orientation of the main screen. The method includes: detecting a first screen doze operation when the electronic device is in a folded state, where in the folded state, the main screen and the rear screen both face outward from the electronic device; activating the main screen camera and the rear screen camera; and displaying a first AOD interface on the rear screen, if the rear screen camera captures an image including a human eye and/or a human face, and the main screen camera does not capture an image including the human eye and/or the human face; or displaying a second AOD interface on the main screen, if the main screen camera captures an image including a human eye and/or a human face, and the rear screen camera does not capture an image including the human eye and/or the human face.

It can be learned from the method that the electronic device may determine, by recognizing the human eye or the human face based on actual needs of a user, a screen displaying an AOD interface. This avoids a case in which a user-facing screen does not display the AOD interface while a non-user-facing screen displays the AOD interface.

With reference to the first aspect, in some implementations, the method further includes: determining the orientation of the main screen and an orientation of the rear screen, if the main screen camera captures an image including the human eye and/or the human face, and the rear screen camera captures an image including the human eye and/or the human face; and displaying the first AOD interface on the rear screen if the rear screen faces upward; or displaying the second AOD interface on the main screen if the main screen faces upward, where upward is a direction opposite to perpendicularly pointing toward the ground.

With reference to the first aspect, in some implementations, the method further includes: determining the orientation of the main screen and the orientation of the rear screen, if the main screen camera does not capture an image including the human eye and/or the human face, and the rear screen camera does not capture an image including the human eye and/or the human face; and if the rear screen faces upward, displaying the first AOD interface on the rear screen in response to the rear screen facing upward, or displaying the first AOD interface on the rear screen after receiving a touch operation performed on the rear screen, or displaying the first AOD interface on the rear screen after entering a preset time period; or if the main screen faces upward, displaying the second AOD interface on the main screen in response to the main screen facing upward, or displaying the second AOD interface on the main screen after receiving a touch operation performed on the main screen, or displaying the second AOD interface on the main screen after entering the preset time period, where upward is the direction opposite to perpendicularly pointing toward the ground.

With reference to the first aspect, in some implementations, when the first screen doze operation is detected, the electronic device is held by a user.

With reference to the first aspect, in some implementations, detecting a first screen doze operation when the electronic device is in the folded state and not held by the user; determining the orientation of the main screen and the orientation of the rear screen; and if the rear screen faces upward, displaying the first AOD interface on the rear screen in response to the rear screen facing upward, or displaying the first AOD interface on the rear screen after receiving a touch operation performed on the rear screen, or displaying the first AOD interface on the rear screen after entering the preset time period, or activating the rear screen camera and displaying the first AOD interface on the rear screen when the rear screen camera captures an image including the human eye and/or the human face; or if the main screen faces upward, displaying the second AOD interface on the main screen in response to the main screen facing upward, or displaying the second AOD interface on the main screen after receiving a touch operation performed on the main screen, or displaying the second AOD interface on the main screen after entering the preset time period, or activating the main screen camera and displaying the second AOD interface on the main screen when the main screen camera captures an image including the human eye and/or the human face, where upward is the direction opposite to perpendicularly pointing toward the ground.

With reference to the first aspect, in some implementations, the method further includes: detecting a third screen doze operation when the electronic device is in an unfolded state, where in the unfolded state, the orientation of the main screen is the same as the orientation of the rear screen; and displaying a third AOD interface on a screen in response to the orientation of the main screen being the same as the orientation of the rear screen, or displaying the third AOD interface on the screen after receiving a touch operation performed on the screen, or displaying the third AOD interface on the screen after entering the preset time period, or activating the rear screen camera or the main screen camera and displaying the third AOD interface on the screen when the rear screen camera or the main screen camera captures an image including the human eye and/or the human face, where the screen includes the rear screen and the main screen whose orientations are the same.

With reference to the first aspect, in some implementations, before the detecting a first screen doze operation, if the electronic device is in a screen-off state, the first screen doze operation includes an operation of touching the screen; if the electronic device is in a screen-on state, the screen doze operation includes a screen lock operation; or if the electronic device is in a power-off state, the first screen doze operation includes a power-on operation.

With reference to the first aspect, in some implementations, an icon in the first AOD interface includes only a first icon; an icon in the second AOD interface includes only the first icon; and a size of the first icon in the first AOD interface is equal to a size of the first icon in the second AOD interface.

With reference to the first aspect, in some implementations, the first AOD interface includes a first icon and a second icon; the first AOD interface includes a first icon and a second icon; and sizes of the first icon and the second icon in the first AOD interface are smaller than sizes of the first icon and the second icon in the second AOD interface.

With reference to the first aspect, in some implementations, the first AOD interface includes a third icon; the second AOD interface includes the third icon; and a size of the third icon in the first AOD interface is smaller than a size of the third icon in the second AOD interface.

With reference to the first aspect, in some implementations, a text in the first AOD interface includes only a first text; a text in the second AOD interface includes only the first text; and a size of the first text in the first AOD interface is equal to a size of the first text in the second AOD interface.

With reference to the first aspect, in some implementations, the first AOD interface includes a first text and a second text; the second AOD interface includes the first text and the second text; and sizes of the first text and the second text in the first AOD interface are smaller than sizes of the first text and the second text in the second AOD interface.

With reference to the first aspect, in some implementations, the first AOD interface includes a fourth icon; the second AOD interface includes a fifth icon; and the fourth icon and the fifth icon belong to a same theme.

According to a second aspect, this application provides an electronic device. The electronic device includes one or more processors and one or more memories. The one or more memories are coupled to the one or more processors. The one or more memories are configured to store computer program code. The computer program code includes computer instructions, and when the one or more processors execute the computer instructions, the electronic device is enabled to perform the method according to any one of the first aspect or any implementations of the first aspect.

According to a third aspect, an embodiment of this application provides a computer storage medium. The computer storage medium includes computer instructions, and when run on an electronic device, the electronic device is enabled to perform the method according to any one of the first aspect or any implementations of the first aspect.

### BRIEF DESCRIPTION OF THE DRAWINGS

FIG. 1A is a schematic diagram of an AOD interface according to an embodiment of this application;
FIG. 1B to FIG. 1E is a schematic diagram of a user interface for setting an AOD function according to an embodiment of this application;
FIG. 2A is a schematic diagram of an electronic device in an unfolded state according to an embodiment of this application;
FIG. 2B is a schematic diagram of an electronic device in a folded state according to an embodiment of this application;
FIG. 3A is a schematic flowchart of an always on display method according to an embodiment of this application;
FIG. 3B is a schematic flowchart of an always on display method according to an embodiment of this application;
FIG. 4A is a schematic diagram of a screen posture when a screen of an electronic device is gradually unfolded according to an embodiment of this application;
FIG. 4B is a schematic diagram of a screen posture when a screen of an electronic device is gradually folded according to an embodiment of this application;
FIG. 5A is a schematic diagram of displaying an AOD interface on a main screen of an electronic device according to an embodiment of this application;
FIG. 5B is a schematic diagram of displaying an AOD interface on a rear screen of an electronic device according to an embodiment of this application;
FIG. 6A is a schematic diagram of displaying an AOD interface on a main screen of an electronic device according to an embodiment of this application;
FIG. 6B is a schematic diagram of displaying an AOD interface on a rear screen of an electronic device according to an embodiment of this application;
FIG. 7A is a schematic diagram of displaying an AOD interface on a main screen of an electronic device according to an embodiment of this application;
FIG. 7B is a schematic diagram of displaying an AOD interface on a rear screen of an electronic device according to an embodiment of this application;
FIG. 8A is a schematic diagram of displaying an AOD interface on a main screen of an electronic device according to an embodiment of this application;
FIG. 8B is a schematic diagram of displaying an AOD interface on a rear screen of an electronic device according to an embodiment of this application;
FIG. 9A is a schematic diagram of displaying an AOD interface on a main screen of an electronic device according to an embodiment of this application;
FIG. 9B is a schematic diagram of displaying an AOD interface on a rear screen of an electronic device according to an embodiment of this application;
FIG. 10 is a schematic diagram of a hardware architecture of an electronic device according to an embodiment of this application; and
FIG. 11 is a schematic diagram of a software architecture of the electronic device according to an embodiment of this application.

### DESCRIPTION OF EMBODIMENTS

The following clearly and completely describes the technical solutions in embodiments of this application with reference to the accompanying drawings. In the descriptions of this embodiment of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of this embodiment of this application, "plurality" indicates two or more.

The following terms "first" and "second" are only intended for a purpose of description, and should not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be recognized by the user. The user interface is usually represented in a form of a graphical user interface (graphic user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget displayed by the electronic device on a display.

To facilitate the understanding of the solutions provided in embodiments of this application, related concept in embodiments of this application is described as follows:

### 1. Always on display (always on display, AOD)

An AOD function is a function of an electronic device to display information such as a time, a date, and an icon in a partial area of a screen without turning on the entire screen (that is, the electronic device maintains a low power state). This is conducive to reducing screen-on power consumption caused by a user viewing information such as the time and the date. In embodiments of this application, a screen of the electronic device may have a screen-off state, a screen-on state, and a screen-doze state. The screen-off state (OFF state) indicates that the screen of the electronic device is turned off. The screen-on state (ON state) indicates that the entire screen of the electronic device is turned on, that is, a turned-on area of the screen includes a black area of the screen. The screen-doze state (Doze state) indicates that the screen of the electronic device is partially turned on, that is, a part of the screen except for the black area is turned on, and in this case, the screen is in a sleep state and the electronic device is in the low-power state. A change between the screen-on state and the screen-off state may include switching the screen from the ON state to the OFF state, or from the ON state to the Doze state, or from the OFF state to the Doze state, or from the Doze state to the ON state, or from the OFF state to the ON state, or other cases.

The following describes an AOD interface and an AOD function in combination with several user interfaces.

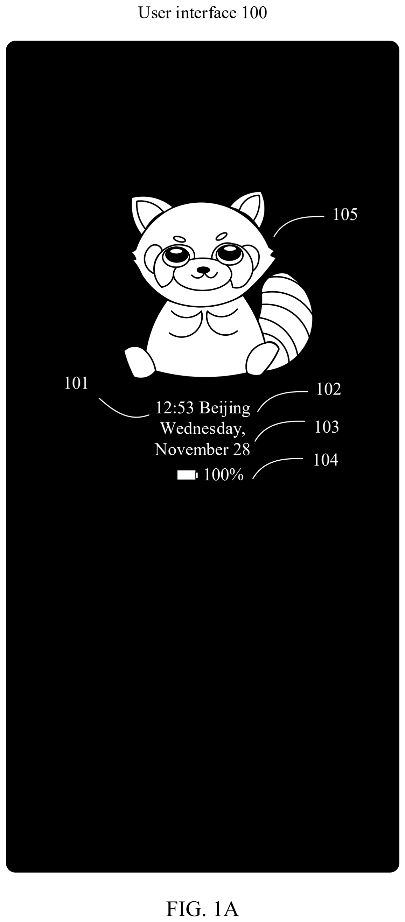

For example, FIG. 1A shows an AOD interface provided by an electronic device.

As shown in FIG. 1A, a user interface 100 may be the AOD interface provided by the electronic device. The user interface 100 may include, but is not limited to: a time 101, a region 102, a date 103, a battery level 104, and an icon 105. In a state-off state of the electronic device, a user may also obtain the time, the date, and other information. This is conducive to reducing screen-on power consumption when the user views the time, the date, and other information.

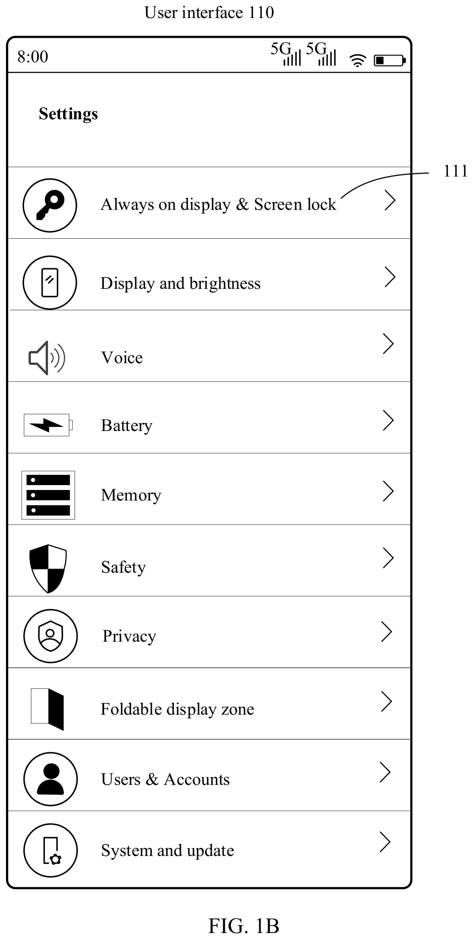

For example, FIG. 1B to FIG. 1E shows some user interfaces of the electronic device for setting an AOD function.

As shown in FIG. 1B, the user interface 110 may be a user interface that is provided by the electronic device and used to set an application. The user interface 110 may include, but is not limited to an always on display and screen lock bar 111 and other functional bars. The electronic device may display a user interface 120 in response to a tap operation performed on the always on display and screen lock bar 111.

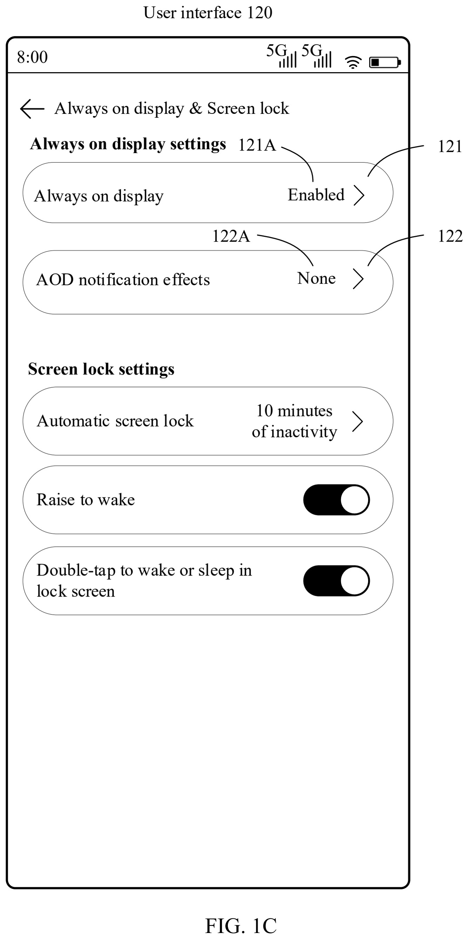

As shown in FIG. 1C, the user interface 120 may be a user interface that is provided by the electronic device and used to set an always on display function and a screen lock function. The user interface 120 may include, but is not limited to an always on display control 121, and a light effect control 122 for an always on display notification. The always on display control 121 may further include prompt information 121A. For example, the prompt information 121A may display text content "enabled". This indicates that the electronic device has enabled the always on display function. The light effect control 122 for an always on display notification may further include prompt information 122A. For example, the prompt information 122A may display text content "None". This indicates that the electronic device is not provided with light effect for an always on display notification. The electronic device may display a user interface 130 in response to a tap operation performed on the always on display control 121.

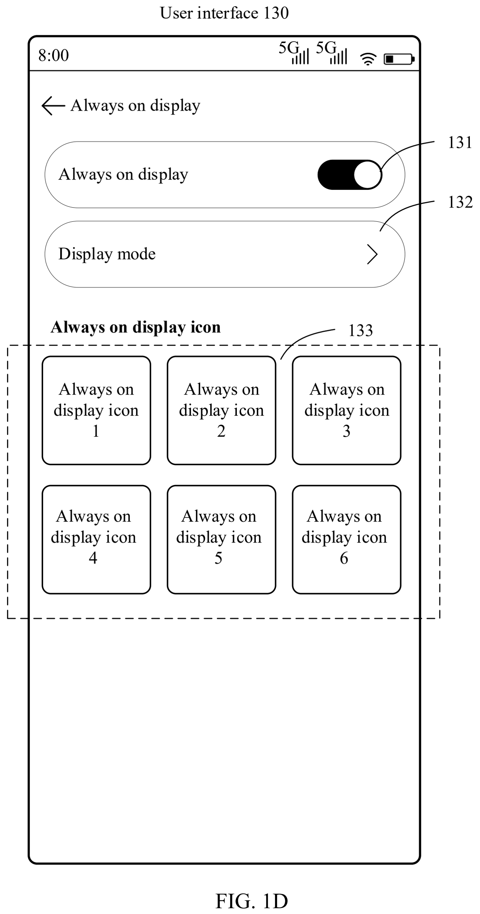

As shown in FIG. 1D, the user interface 130 may be a user interface that is provided by the electronic device and used to set the always on display function. The user interface 130 may include, but is not limited to: an always on display switch 131, a display mode control 132, and a plurality of always on display icons 133. The electronic device may enable or disable the always on display function in response to a tap operation performed on the always on display switch 131. The electronic device may, in response to a tap operation performed on one of the plurality of always on display icons 133, determine an icon displayed when the electronic device enters always on display. The electronic device may display a user interface 140 in response to a tap operation performed on the display mode control 132.

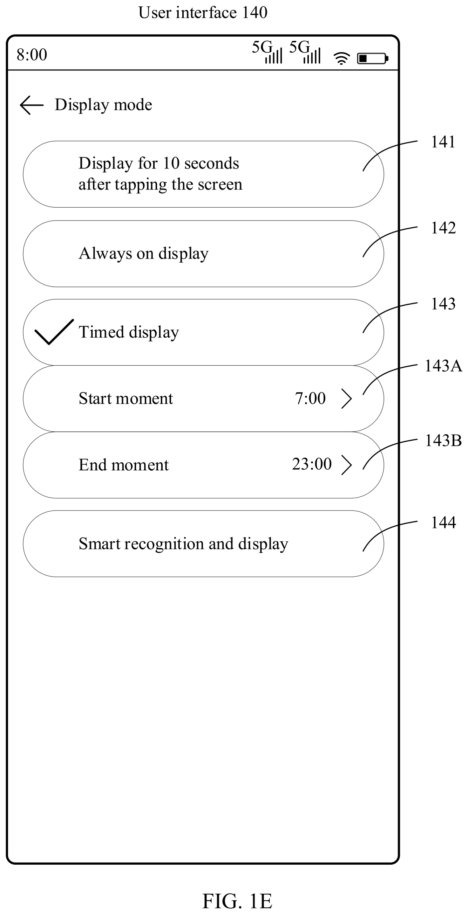

As shown in FIG. 1E, the user interface 140 may be a user interface that is provided by the electronic device and used to select an always on display mode. The user interface 140 may include, but is not limited to a display mode 141, a display mode 142, a display mode 143, and a display mode 144. For example, the display mode 141 is a light-touch display mode, which may display text content "display for 10 seconds after tapping the screen". The display mode 142 is a steady-on display mode, which may display text content "always on display". The display mode 143 is a timed display mode, which may display text content "timed display". In addition, the electronic device displays, in response to a tap operation performed on the display mode 143, controls for selecting a start moment and an end moment of the timed display, for example, may display a start moment control 143A and an end moment control 143B. The electronic device may select, in response to the user operation, any moment as the start moment and the end moment of the timed display. The display mode 144 is a smart display mode, which may display text content "smart recognition and display".

In this embodiment of this application, the foregoing user interface is merely an example for description. For example, the user interface 120 may only display content related to the always on display. More or less content may be displayed in the various user interfaces, which is not limited herein.

In some implementations, the electronic device may enable the always on display function. When the electronic device satisfies a condition for displaying the AOD interface, the electronic device may display the AOD interface. Modes for displaying the AOD interface may include, but are not limited to:
Mode 1: light-touch display mode. The mode 1 may mean that the electronic device may display, in response to a user operation of lightly touching a screen, the AOD interface for a time period in a Doze state. In this embodiment of this application, the time period for displaying the AOD interface is not limited, and may also be time lengths such as 5 seconds, 8 seconds, 10 seconds, or the like.

Mode 2: steady-on display mode. The mode 2 may mean that the electronic device may always display the AOD interface in the Doze state. In a possible implementation, after a moment at which the electronic device is switched to a screen lock state and within an extremely short time period after the electronic device is switched to the screen lock state, the electronic device may take an extremely short time to recognize that the electronic device has been switched to the screen lock state, and display the AOD interface after recognizing that the electronic device has been switched to the screen lock state. To a specific extent, the extremely short time may be ignored.

Mode 3: timed display mode. The mode 3 may mean that during a preset time period, the electronic device may display the AOD interface in the Doze state. The preset time period may be set by the user. For example, as shown in FIG. 1E, the preset time period may be between 7:00 and 23:00.

Mode 4: smart display mode. The mode 4 may mean that the electronic device may display, in the Doze state, the AOD interface for the time period if the electronic device recognizes a portrait, for example, 10 seconds. In some implementations, the electronic device may acquire image data via a camera, and may perform portrait recognition based on the image data. The portrait recognition may include: recognizing a human eye and/or a human face.

In some implementations, the electronic device may select any one of the mode 1, the mode 2, and the mode 3 to enable the always on display function. The electronic device may select any of the mode 2, the mode 3, and the mode 4 to implement the always on display function. In a possible implementation, the electronic device may further select the mode 4 while selecting the mode 1, the mode 2, or the mode 3.

### 2. Outward-foldable screen

The outward-foldable screen is a folded screen that can be viewed by the user. That is, the folded screen faces outward. It should be noted that for the outward-foldable screen, a main screen and a rear screen may be different display areas of a same screen, or may be different display areas of two screens, which is not limited herein. In a possible implementation, the main screen is connected to the rear screen via a folding member (for example, a side display or a hinge).

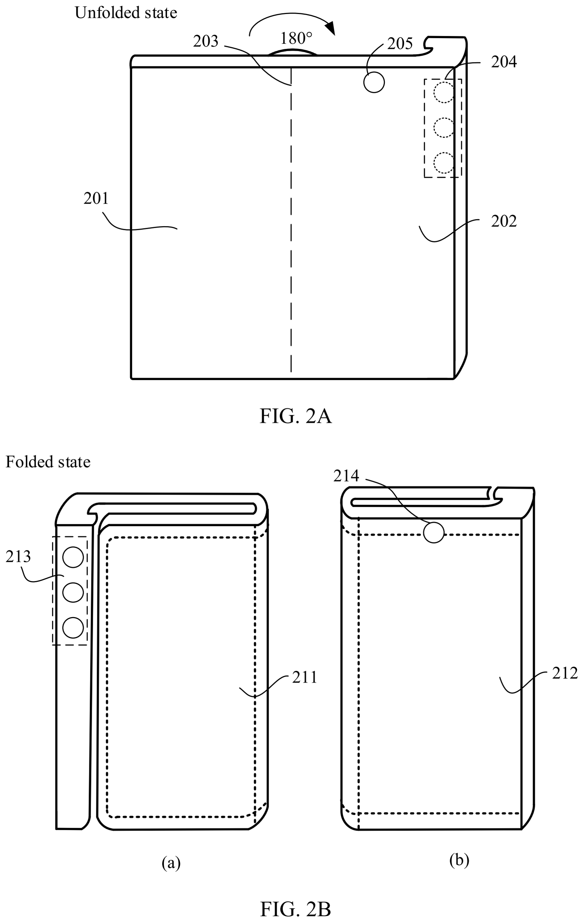

The following describes a structural form of the outward-foldable screen with reference to FIG. 2A and FIG. 2B. The electronic device may include an unfolded state and a folded state. The electronic device may be a portable terminal device equipped with iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device.

The various types of electronic devices described in this application are provided with a foldable screen. That is, a display of the electronic device may be folded and divided into at least two displays via a folding axis after being folded.

FIG. 2A shows an example of a structural form of an electronic device in an unfolded state.

As shown in FIG. 2A, the electronic device may include a rear screen 201, a main screen 202, and a central axis 203. The rear screen 201 and the main screen 202 may be referred to as an entire screen. When the electronic device is in an unfolded state, an orientation of the entire screen of the electronic device is the same as an orientation of the rear screen 201 and an orientation of the main screen 202. That is, the orientation of the main screen 202 is the same as the orientation of the rear screen 201. When the user faces the entire screen, a display area viewed is the entire screen. The electronic device may further include a rear screen camera 204 and a main screen camera 205. The rear screen camera 204 may include one or more cameras, and the main screen camera 205 may include one or more cameras. When the electronic device is in the unfolded state, the main screen camera 205 is located on a side of the entire screen. That is, the orientation of the main screen camera 205 is the same as the orientation of the rear screen 201 and the orientation of the main screen 202. The rear screen camera 204 is located on a side of the back of the entire screen. That is, the orientation of the rear screen camera 204 is opposite to the orientation of the main screen camera 205.

For example, FIG. 2B shows a structural form of the electronic device in a folded state.

As shown in FIG. 2B, (a) and (b) show the electronic device in a same folded state. (b) may be a schematic diagram after (a) is flipped 180 around a central axis. The electronic devices each may include, but are not limited to: a rear screen 211 and a main screen 212. An orientation of the rear screen 211 is opposite to an orientation of the main screen 212. In (a), the rear screen 211 of the electronic device may face the user, while the main screen 212 faces away from the user. In (b), the main screen 212 of the electronic device may face the user, while the rear screen 211 faces away from the user. The electronic device may further include a rear screen camera 213 and a main screen camera 214. When the electronic device is in the folded state, the rear screen camera 213 is located on a side of the rear screen 211. That is, an orientation of the rear screen camera 213 is the same as the orientation of the rear screen 211. The main screen camera 214 is located on a side of the main screen 212. That is, an orientation of the main screen camera 214 is the same as the orientation of the main screen 212.

In some implementations, a length of the rear screen 211 is the same as a length of the main screen 212, and a width of the rear screen 211 is 85% of a width of the main screen 212. In this embodiment of this application, the value of 85% is merely an example for description, and only the width of the main screen 212 being greater than the width of the rear screen 211 needs to be satisfied, which is not limited.

In some implementations, similarly, an electronic device having an outward-foldable screen may display an AOD interface. The electronic device in the folded state may determine the orientation of the main screen and the orientation of the rear screen. When the main screen of the electronic device faces upward, the electronic device may display the AOD interface on the main screen. When the rear screen of the electronic device faces upward, the electronic device may display the AOD interface on the rear screen. However, in some cases, the electronic device may be in a state in which neither the main screen faces upward nor the rear screen faces upward. For example, when the user holds or places the electronic device on another apparatus, a folding member of the electronic device (for example, a side display) faces upward. In this case, it may not be determined whether the AOD interface is displayed by the rear screen or the main screen. As a result, the electronic device may not display the AOD interface, which affects user experience. In some other cases, the user may similarly be in a lying-down posture. In this case, a screen that displays the AOD interface and that needs to be viewed by the user faces downward. According to a principle that the electronic device displays the AOD interface on a screen facing upward, the electronic device may not display the AOD interface on a screen (for example, a screen facing downward) on which the user needs to view the AOD interface.

In this embodiment of this application, upward may be a direction opposite to perpendicularly pointing toward the ground or a direction opposite to proximally perpendicularly pointing toward the ground, and downward may be a direction perpendicularly pointing toward the ground or a direction proximally perpendicularly pointing toward the ground.

To resolve the foregoing problem, embodiments of this application provide an always on display method and an electronic device. In the method, the electronic device adds an always on display mode capable of recognizing a human face or a human eye. In a screen-doze state, it may first determine a folded state of the electronic device, determine whether a condition for displaying an AOD interface is satisfied, for example, recognizing the human face or the human eye, or the like, and determine to display the AOD interface on the main screen or display the AOD interface on the rear screen.

Further, the electronic device may further determine whether being held by the user, to more accurately determine the screen displaying the AOD interface.

Performing the foregoing method can avoid determining the screen displaying the AOD interface solely based on an orientation of the screen. In this way, the AOD interface can be better displayed based on a user requirement.

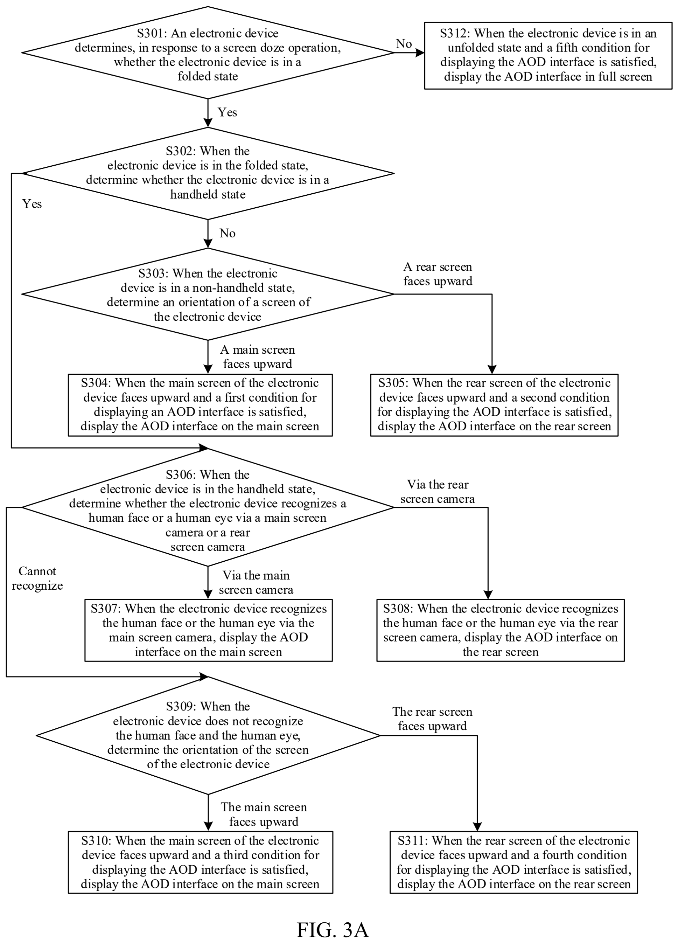

The following describes the always on display method provided in embodiments of this application with reference to FIG. 3A. An execution body of the method shown in FIG. 3A may be the foregoing electronic device. Alternatively, an execution body of the method shown in FIG. 3A may be a chip in an electronic device, which is not limited in this embodiment of this application. FIG. 3A uses an example in which the execution body of the method is an electronic device for description. The electronic device includes a display. The display includes a main screen and a rear screen. The main screen and the rear screen are two display areas of a same display. When the electronic device is folded, an orientation of the main screen is opposite to an orientation of the rear screen. When the electronic device is unfolded, an orientation of the main screen is the same as an orientation of the rear screen, and the display area is an entire display. The method includes the following steps.

### S301: An electronic device determines, in response to a screen doze operation, whether the electronic device is in a folded state.

In some implementations, before S301 is performed, the electronic device may enable an always on display function to reduce screen-on power consumption when a user views a time, a date, and other information.

The screen doze operation may include, but is not limited to: a screen lock operation, a power-on operation, a light-touch operation, and the like. Specifically, the screen lock operation may include, but is not limited to: a pressing operation performed on a screen lock button located on a side edge or a top edge of the electronic device, a tap operation performed on a screen lock control in a user interface, a voice instruction, a gesture instruction, and the like. When the screen doze operation is the screen lock operation, the screen doze operation may be used to trigger switching a display state of a screen from an ON state to a Doze state. The power-on operation may include a long press operation that is performed on a power-on and power-off button located on the side edge or the top edge of the electronic device. When the screen doze operation is a power-on operation, the screen doze operation may be used to trigger switching the display state of the screen from the ON state to the Doze state. Actually, before responding to the power-on operation, the electronic device is in an off state. After responding to the power-on operation, the electronic device is switched from the off state to the ON state of the power-on state. An operation of lightly touching a screen lock interface may include an operation of lightly touching the screen by the user after the electronic device enters screen-off. When the screen doze operation is the light-touch operation, the screen doze operation may be used to trigger switching the display state of the screen from the OFF state to the Doze state. It should be noted that when the screen doze operation performed by the user is the operation of lightly touching the screen, a mode for displaying an AOD interface may only be a mode 1. In other words, if the electronic device does not use the mode 1 to implement the always on display function, the light-touch operation cannot trigger switching the display state of the screen from the OFF state to the Doze state.

In a software structure of the electronic device, an application layer includes an AOD application; an application framework layer includes a device state provider, a fold screen manager service, a power manager service, and a device manager service; and a hardware abstraction layer includes a sensor service. After the AOD function is enabled, for a specific implementation of determining whether the electronic device is in the folded state, refer to the following content:

The electronic device may enable the AOD application, and the AOD application registers with the power manager service for detection. A specific event detected by the AOD application is whether a display state of a screen of the power manager service is switched to the Doze state or whether a display state of a screen of the power manager service is switched from the Doze state to the ON state. The power manager service notifies, through a callback function onDreamingStarted in response that the display state of the screen is switched to the Doze state, the AOD application that a current display state of the screen is switched to the Doze state. The AOD application invokes a getDisplayMode function to obtain a screen posture of the electronic device from a device state provider.

In some implementations, the electronic device may determine, in responding to the screen doze operation, whether the electronic device is in the folded state. Specifically, the electronic device may determine, via a gesture sensor and/or a Hall sensor, whether the electronic device is in the folded state. The gesture sensor may include an acceleration sensor and a gyroscope sensor.

In a possible implementation, the electronic device may detect an angle between a main screen and a rear screen via the gesture sensor, and may determine the screen posture of the electronic device based on the angle. The angle between the main screen and the rear screen means an angle between a plane on which the main screen is located and a plane on which the rear screen is located. For a specific implementation of determining, via the gesture sensor, whether the electronic device is in the folded state, refer to the following content: The sensor service may provide the device state provider with gesture sensor data (for example, the angle between the main screen and the rear screen), and the device state provider determines the screen posture of the electronic device based on the gesture sensor data provided by the sensor service.

The following describes how to determine the screen posture of the electronic device based on the angle between the main screen and the rear screen.

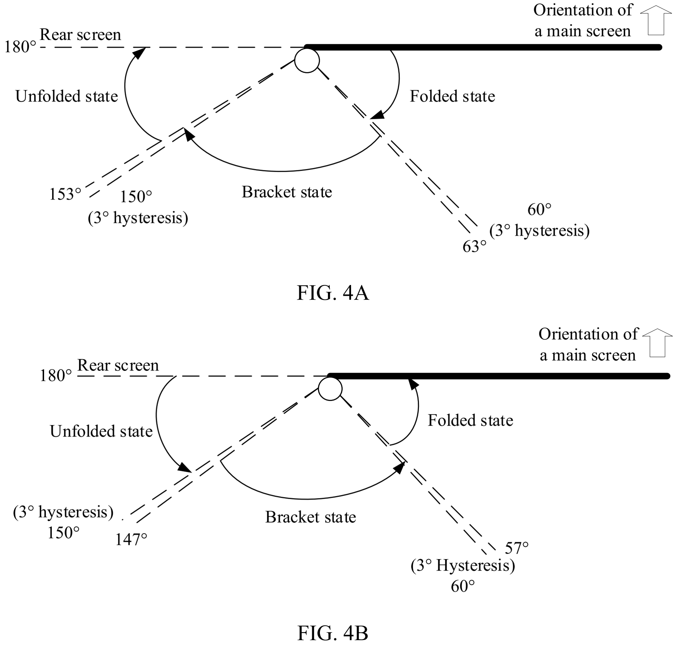

FIG. 4A shows a schematic diagram of an example of a screen posture when a screen of an electronic device is gradually unfolded. FIG. 4B shows a schematic diagram of an example of a screen posture when a screen of an electronic device is gradually folded.

As shown in FIG. 4A, when the screen of the electronic device is gradually unfolded and the angle between the main screen and the rear screen is 0° to 60°, it may be determined that the screen of the electronic device is in a folded state. When the angle between the main screen and the rear screen is 63° to 153°, it may be determined that the screen posture of the electronic device is a bracket state. When the angle between the main screen and the rear screen is 153° to 180°, it may be determined that the screen posture of the electronic device is an unfolded state. As shown in FIG. 4B, when the screen of the electronic device is gradually folded and when the angle between the main screen and the rear screen is 150° to 180°, it may be determined that the screen of the electronic device is in an unfolded state. When the angle between the main screen and the rear screen is 57° to 147°, it may be determined that the screen posture of the electronic device is a bracket state. When the angle between the main screen and the rear screen is 0° to 57°, it may be determined that the screen posture of the electronic device is a folded state. When the folded state is switched to the bracket state or the bracket state is switched to the folded state, a specific error rate can be ensured by means of a 3-degree hysteresis, and a previous screen posture is taken as a screen posture at a hysteresis angle. This is conducive to improving accuracy of detecting the screen posture of the electronic device. When the bracket state is switched to the folded state or the folded state is switched to the bracket state and the angle between the main screen and the rear screen is located at a boundary value, a previous screen posture is also taken as a current screen posture. This is conducive to improving detecting accuracy of detecting the screen posture of the electronic device. In this embodiment of this application, the degree of hysteresis may be any predefined value. In this case, 3-degree is used as an example and is not limited.

In another possible implementation, the electronic device may detect a magnetic field strength between the main screen and the rear screen via the Hall sensor, and determine the screen posture of the electronic device based on the magnetic field strength. For example, when the magnetic field strength between the main screen and the rear screen is greater than or equal to a preset value of the magnetic field strength, it may be determined that a screen state of the electronic device is in the folded state. When the magnetic field strength between the main screen and the rear screen is less than the preset value of the magnetic field strength, it may be determined that the screen state of the electronic device is in the unfolded state or the bracket state. For a specific implementation of determining whether the electronic device is in the folded state via the Hall sensor, refer to the following content: The sensor service may provide Hall sensor data (for example, whether the electronic device is in the folded state) to the device state provider, and the device state provider determines the screen posture of the electronic device based on the Hall sensor data provided by the sensor service.

In another possible implementation, the electronic device may determine the screen state of the electronic device via the gesture sensor and the Hall sensor. In this way, the accuracy of detecting the screen posture of the electronic device can be further improved. For the manner in which the screen state of the electronic device is determined by the gesture sensor and the Hall sensor, refer to the foregoing content. Details are not described herein again.

For example, the electronic device determines that the screen posture of the electronic device is the folded state based on the angle between the main screen and the rear screen. In this case, the screen posture of the electronic device needs to be further determined based on the Hall sensor data. If it is determined, based on the Hall sensor data, that the screen posture of the electronic device is also the folded state, it can be determined that the screen posture of the electronic device is the folded state. If it is determined, based on the Hall sensor data, that the screen posture of the electronic device is not the folded state, the posture sensor data and/or the Hall sensor data need/needs to be re-obtained, to re-determine the screen posture of the electronic device. In this embodiment of this application, the foregoing is merely an example for description. The screen posture can be more accurately determined via the posture sensor and the Hall sensor in other manners, which is not limited.

In a possible implementation, when the electronic device detects a change (for example, the user folds an unfolded electronic device, or unfolds a folded electronic device) in the screen posture, the screen posture needs to be re-determined. That is, the process of the method shown in FIG. 3A needs to be re-performed.

When it is determined that the screen posture of the electronic device is the folded state, S302 is performed. When it is determined that the screen posture of the electronic device is the unfolded state, S312 is performed.

**S302: When the electronic device is in the folded state, determine whether the electronic device is in a handheld state.**

In some implementations, when the electronic device is in the handheld state, it may be understood that a user is currently holding the electronic device, and a user requirement needs to be considered first, rather than merely considering the state of the electronic device. When the electronic device is in a non-handheld state, the user does not hold the electronic device currently, and the electronic device may be placed on another object. In this case, priority can be given to the state of the electronic device.

Since the electronic device is in the folded state, as shown in FIG. 2B, if the user holds the electronic device, the user inevitably touches the main screen and/or the rear screen of the electronic device. In some implementations, the electronic device may determine whether the electronic device is in the handheld state via a touch sensor. Specifically, the electronic device may determine, by determining data collected by the touch sensor and analyzing a touched position on the electronic device, whether the electronic device is currently in the handheld state.

In a possible implementation, the electronic device may further determine, via an acceleration sensor, an optical proximity sensor, and a temperature sensor, whether the electronic device is currently in the handheld state. Specifically, the electronic device may determine, based on data collected by the acceleration sensor, whether a moving track of the electronic device is a moving track formed when the user holding the electronic device in hand moves. If the moving track of the electronic device is the moving track formed when the user holding the electronic device in hand moves, it is determined that the electronic device may be in the handheld state. Further, on the basis of determining whether the moving track of the electronic device is the moving track formed when the user holding the electronic device in hand moves, if the electronic device determines, via the optical proximity sensor, that a portion of the electronic device is blocked and determines, via the temperature sensor, that a temperature of the blocked portion is close to a temperature of a human hand, it may be further determined that the electronic device is in the handheld state.

In this embodiment of this application, the foregoing manner of determining whether the electronic device is in the handheld state is merely an example for description. Other manners may be used, which is not limited herein.

When it is determined that the electronic device is in the non-handheld state, S303 is performed. When it is determined that the electronic device is in the handheld state, S306 is performed.

**S303: When the electronic device is in the non-handheld state, determine an orientation of the screen of the electronic device.**

In some implementations, a precondition for performing S303 is that the electronic device is in the non-handheld state and the screen state of the electronic device is the folded state. Therefore, the electronic device may rest on another object, and an orientation of the main screen is inevitably not the same as an orientation of the rear screen.

In this embodiment of this application, when the electronic device determines that the screen posture is the folded state, the orientation of the screen of the electronic device may be further determined based on a posture angle, an acceleration, and other data, to facilitate subsequent displaying of the AOD interface based on the orientation of the screen. The orientation of the screen may mean the orientation of the main screen. For example, the main screen faces upward, or the main screen faces downward. Optionally, the orientation of the screen of the electronic device may also mean the orientation of the rear screen. For example, the rear screen faces upward, or the rear screen faces downward. In this embodiment of this application, the main screen facing upward may also be understood that the rear screen faces downward, and the main screen facing downward may also be understood that the rear screen faces upward, which is not limited.

For a specific implementation of determining the orientation of the screen of the electronic device, refer to the following content: When the screen posture of the electronic device is the folded state, the AOD application invokes a registerDeviceListener function to detect the device manager service. A specific detection event is that the device manager service determines the orientation of the screen of the electronic device and sends the orientation of the screen of the electronic device to the AOD application. Correspondingly, the AOD application may obtain the orientation of the screen of the electronic device.

In a possible implementation, when the electronic device determines the orientation of the screen of the electronic device, a specific implementation may be as follows: The electronic device obtains a vertical acceleration when the electronic device is in a static state. If a direction of the vertical acceleration faces downward, the electronic device determines that the main screen of the electronic device faces upward. If a direction of the vertical acceleration faces upward, the electronic device determines that the main screen of the electronic device faces downward.

In a specific implementation, when the electronic device is in the static state, the vertical acceleration of the electronic device is obtained via the acceleration sensor. The orientation of the screen of the electronic device may be determined based on the direction of the vertical acceleration. Specifically, if the direction of the vertical acceleration is downward (for example, the vertical acceleration is 9.8), it is considered that the main screen of the electronic device faces upward. If the direction of the vertical acceleration is upward (for example, the vertical acceleration is -9.8), it is considered that the main screen of the electronic device faces downward.

Optionally, the electronic device obtaining the vertical acceleration of the electronic device in the static state may be specifically as follows: The electronic device obtains a vertical acceleration that is of the electronic device in the static state with the posture angle less than a preset value. The posture angle is an angle between a display plane of the electronic device and a horizontal plane. The preset value may be 8°, or may be any preset value, which is not limited herein. Based on this manner, it is possible to ensure that the display plane of the electronic device is flush with the horizontal plane within a specific error range. This is conducive to improving accuracy of determining the orientation of the screen of the electronic device.

In a possible implementation, the electronic device may perform S303 at a fixed time interval. For example, in a case that the electronic device determines, in response to the screen doze operation, that the screen posture is the folded state and that the electronic device is in the non-handheld state, the electronic device determines the orientation of the screen of the electronic device every 1 minute. In this embodiment of this application, the fixed time interval is merely an example for description, which is not limited.

In a possible implementation, a function of recognizing a portrait via a main screen camera or a rear screen camera may be deactivated when S301 to S303 are performed. After the orientation of the screen of the electronic device is determined, a function of recognizing a human eye or a portrait via a camera is enabled. In this way, power consumption can be reduced.

When the electronic device determines that the orientation of the screen is that the main screen faces upward, S304 is performed. When the electronic device determines that the orientation of the screen is that the rear screen faces upward, S305 is performed.

**S304: When the main screen of the electronic device faces upward and a first condition for displaying the AOD interface is satisfied, display the AOD interface on the main screen.**

In some implementations, the first condition may include any one of the following: When the electronic device uses the mode 1, the main screen of the electronic device receives a light-touch operation; when the electronic device uses a mode 2, no operation needs to be received; when the electronic device uses a mode 3, no operation needs to be received within a preset time period; when the electronic device uses a mode 4, the electronic device recognizes a human eye or a human face via a camera on the main screen; or when the electronic device uses both the mode 1 and a mode 4, the main screen of the electronic device receives a light-touch operation or recognizes a human eye or a human face via a camera on the main screen.

For a time for displaying the AOD interface in S304, refer to the foregoing description related to AOD. Specifically, when the electronic device uses the mode 1 and the main screen of the electronic device receives the light-touch operation, the AOD interface may be displayed on the main screen for a period of time (for example, 10 seconds). When the electronic device uses the mode 2, the AOD interface may be displayed on the main screen until the electronic device is switched from the Doze state to the OFF state or the ON state. When the electronic device uses the mode 3, the AOD interface may be displayed on the main screen within the preset time period until the electronic device is switched from the Doze state to the OFF state or the ON state. When the electronic device uses the mode 4 and the electronic device recognizes the human face or the human face via the camera on the main screen, the AOD interface may be displayed on the main screen for a period of time (for example, 10 seconds).

In a possible implementation, when the electronic device uses both the mode 1 and the mode 4, the time for displaying the AOD interface by the electronic device is subject to a mode that is triggered later. For example, the electronic device receives a light-touch operation performed on the main screen at a moment a, and detects the human face via the camera on the main screen at a moment b, where the moment b is 4 seconds after the moment a. In this case, the main screen may display the AOD interface for 14 seconds after the moment a, that is, may display the AOD interface for 10 seconds after the moment b.

In another possible implementation, when the electronic device uses both the mode 1 and the mode 4, the time for displaying the AOD interface by the electronic device is subject to a mode that is triggered first. For example, the electronic device receives a light-touch operation performed on the main screen at a moment a, and detects the human face via the camera on the main screen at a moment b, where the moment b is after the moment a, with a difference of 4 seconds. In this case, the main screen may display the AOD interface for 10 seconds after the moment a, that is, may display the AOD interface for 6 seconds after the moment b. In this embodiment of this application, the duration for displaying the AOD interface when the two modes are used is merely an example for description, which is not limited.

In a possible implementation, if the orientation of the screen of the electronic device changes in the process in which the electronic device displays the AOD interface, a screen on which the electronic device displays the AOD interface is changed, and the time for displaying the AOD interface is also changed.

Specifically, the electronic device may determine, based on the direction of the vertical acceleration, that the electronic device is flipped from the main screen facing upward to the rear screen facing upward. For this determining manner, refer to the related description in S303, and details are not described herein. Then, the electronic device may display the AOD interface on the rear screen. The electronic device may reset the time for displaying the AOD interface, or may calculate a total time for displaying the AOD interface on the main screen and the rear screen. For example, when the electronic device uses the mode 1, the main screen of the electronic device faces upward, and the electronic device displays the AOD interface on the main screen at a moment c in response to a light-touch operation performed on the main screen. At a moment d, the electronic device is flipped, the rear screen of the electronic device faces upward, and the AOD interface is displayed on the rear screen. The moment d is after the moment c, with a difference of 4 seconds. In this case, the duration for displaying the AOD interface on the rear screen may be 10 seconds, or may be 6 seconds. In this embodiment of this application, a time for displaying the AOD interface on another screen after the electronic device displaying the AOD interface is flipped is not limited.

In a possible implementation, when the electronic device is in the non-handheld state and the main screen of the electronic device faces upward, even if the rear screen of the electronic device receives a light-touch operation, the AOD interface is not displayed on the rear screen.

**S305: When the rear screen of the electronic device faces upward and a second condition for displaying the AOD interface is satisfied, display the AOD interface on the rear screen.**

In some implementations, the second condition may include any one of the following: When the electronic device uses the mode 1, the rear screen of the electronic device receives a light-touch operation; when the electronic device uses the mode 2, no operation needs to be received; when the electronic device uses the mode 3, no operation needs to be received within the preset time period; when the electronic device uses the mode 4, the electronic device recognizes a human eye or a human face via a camera on the rear screen; or when the electronic device uses both the mode 1 and the mode 4, the rear screen of the electronic device receives the light-touch operation or recognizes a human eye or a human face via the camera on the rear screen.

For a time for displaying the AOD interface in S305, refer to the foregoing description related to AOD. Specifically, when the electronic device uses the mode 1 and the rear screen of the electronic device receives the light-touch operation, the AOD interface may be displayed on the rear screen for the time period (for example, 10 seconds). When the electronic device uses the mode 2, the AOD interface may be displayed on the rear screen until the electronic device is switched from the Doze state to the OFF state or the ON state. When the electronic device uses the mode 3, the AOD interface may be displayed on the rear screen within the preset time period until the electronic device is switched from the Doze state to the OFF state or the ON state. When the electronic device uses the mode 4 and the electronic device recognizes the human face or the human face via the camera on the rear screen, the AOD interface may be displayed on the main screen for a time period (for example, 10 seconds).

In a possible implementation, when the electronic device uses both the mode 1 and the mode 4, the time for displaying the AOD interface by the electronic device is subject to the mode that is triggered later. For example, if the electronic device receives the light-touch operation performed on the rear screen at the moment a, and detects the human face via the camera on the rear screen at the moment b, where the moment b is after the moment a, with the difference of 4 seconds, the rear screen may display the AOD interface for 14 seconds after the moment a, that is, may display the AOD interface for 10 seconds after the moment b.

In another possible implementation, when the electronic device uses both the mode 1 and the mode 4, the time for displaying the AOD interface by the electronic device is subject to the mode that is triggered first. For example, if the electronic device receives the light-touch operation performed on the rear screen at the moment a, and detects the human face via the camera on the rear screen at the moment b, where the moment b is after the moment a, with a difference of 4 seconds, the rear screen may display the AOD interface for 10 seconds after the moment a, that is, may display the AOD interface for 6 seconds after the moment b. In this embodiment of this application, the duration for displaying the AOD interface when the two modes are used is merely an example for description, which is not limited.

In a possible implementation, if the orientation of the screen of the electronic device changes in the process in which the electronic device displays the AOD interface, a screen on which the electronic device displays the AOD interface is changed, and the time for displaying the AOD interface is also changed.

Specifically, the electronic device may determine, based on the direction of the vertical acceleration, that the electronic device is flipped from the rear screen facing upward to the main screen facing upward. For this determining manner, refer to the related description in S303, and details are not described herein. Then, the electronic device may display the AOD interface on the main screen. The electronic device may reset the time for displaying the AOD interface, or may calculate the total time for displaying the AOD interface on the main screen and the rear screen. For example, when the electronic device uses the mode 1, if the rear screen of the electronic device faces upward, the electronic device displays the AOD interface on the rear screen at a moment c in response to the light-touch operation performed on the rear screen. At the moment d, the electronic device is flipped, the main screen of the electronic device faces upward, and the AOD interface is displayed on the main screen. The moment d is after the moment c, with a difference of 4 seconds. Then, the duration for displaying the AOD interface on the main screen may be 10 seconds, or may be 6 seconds. In this embodiment of this application, a time for displaying the AOD interface on another screen after the electronic device displaying the AOD interface is flipped is not limited.

In a possible implementation, when the electronic device is in the non-handheld state and the rear screen of the electronic device faces upward, although the main screen of the electronic device receives the light-touch operation, the AOD interface is not displayed on the main screen.

In a possible implementation, when the electronic device uses the mode 4, after the orientation of the screen of the electronic device is determined, since a camera on a screen of which orientation faces downward may not capture valid data of the human face or the human eye, the camera on the screen of which orientation faces downward may be deactivated, or the camera on the screen of which orientation faces downward may be activated, but data of a captured image may not be uploaded. In this way, the acquisition of unnecessary image data is reduced, thereby reducing power consumption of the electronic device. For example, in S304, the main screen of the electronic device faces upward. In this case, the camera on the rear screen may be deactivated, or the camera on the rear screen may be activated, but data of an image captured by the camera on the rear screen may not be uploaded. In S305, the rear screen of the electronic device faces upward. In this case, the camera on the main screen may be deactivated, or the camera on the main screen may be activated, but data of an image captured by the camera on the main screen may not be uploaded.

**S306: When the electronic device is in the handheld state, determine whether the electronic device recognizes the human face or the human eye via the main screen camera or the rear screen camera.**

In some implementations, the electronic device may use, based on a user requirement, the mode 4 to display the AOD interface. Alternatively, the electronic device may use the mode 4 to automatically display the AOD interface. When it is determined that the electronic device is in the handheld state, the main screen camera and the rear screen camera of the electronic device are both activated. It may be understood that the camera recognizing the human face or the human eye in S306 may be used to determine whether the AOD interface is displayed on the main screen or the AOD interface is displayed on the rear screen.

When the main screen camera of the electronic device recognizes the human face or the human eye, S307 is performed. When the rear screen camera of the electronic device recognizes the human face or the human eye, S308 is performed. When both the main screen camera and the rear screen camera of the electronic device do not recognize the human face and the human eye, S309 is performed.

**S307: When the electronic device recognizes the human face or the human eye via the main screen camera, display the AOD interface on the main screen.**

In some implementations, the electronic device recognizing the human face or the human eye via the main screen camera may be understood that the user is currently facing or watching the main screen. It should be noted that in this case, the user may be lying down, and the main screen of the electronic device faces downward. That is, in a possible implementation, when the rear screen of the electronic device faces upward, the AOD interface may be displayed on the main screen.

In some implementations, when the electronic device uses the mode 4 only and recognizes the human face or the human eye via the main screen camera, the AOD interface may be displayed on the main screen for the time period (for example, 10 seconds). When the electronic device uses the mode 1 and the mode 4 and recognizes the human face or the human eye via the main screen camera, the main screen of the electronic device receives the light-touch operation and displays the AOD interface on the main screen for the time period (for example, 10 seconds). When the electronic device uses the mode 2 and the mode 4, the AOD interface may be displayed on the main screen until the electronic device is switched from the Doze state to the OFF state or the ON state. When the electronic device uses the mode 3 and the mode 4 and recognizes the human face or the human eye via the main screen camera, the AOD interface may be displayed on the main screen within the preset time period until the electronic device is switched from the Doze state to the OFF state or the ON state.

In a possible implementation, when the electronic device uses the mode 1 and the mode 4 and recognizes the human face or the human eye via the main screen camera, the AOD interface may be displayed on the main screen for the time period (for example, 10 seconds). That is, a first display on the main screen may be triggered without performing the light-touch operation, and a next display on the main screen needs to be triggered by performing the light-touch operation.

In a possible implementation, after S307 is performed, the electronic device may recognize the human face or the human eye via the rear screen camera. When the human face and the human eye may not be recognized via the main screen camera, the AOD interface may be displayed on the rear screen. Specifically, the electronic device may recognize the human face or the human eye via the rear screen camera. Then, the electronic device may display the AOD interface on the rear screen. The electronic device may reset the time for displaying the AOD interface, or may calculate the total time for displaying the AOD interface on the main screen and the rear screen. For example, when the electronic device uses the mode 1 and the electronic device recognizes the human face or the human eye via the main screen camera at the moment c, the AOD interface is displayed on the main screen. At the moment d, the electronic device recognizes the human face or the human eye via the rear screen camera but does not recognize the human face or the human eye via the main screen camera, the AOD interface may be displayed on the rear screen. The moment d is after the moment c, with a difference of 4 seconds. In this case, the duration for displaying the AOD interface on the rear screen may be 10 seconds, or may be 6 seconds. In this embodiment of this application, after the electronic device displaying the AOD interface detects a change in a camera recognizing the human face or the human eye, the time for displaying the AOD interface on another screen is not limited.

**S308: When the electronic device recognizes the human face or the human eye via the rear screen camera, display the AOD interface on the rear screen.**

In some implementations, the electronic device recognizing the human face or the human eye via the rear screen camera may be understood that the user is currently facing or watching the rear screen. It should be noted that in this case, the user may be lying down, and the rear screen of the electronic device faces downward. That is, in a possible implementation, when the main screen of the electronic device faces upward, the AOD interface may be displayed on the main screen.

In some implementations, when the electronic device uses the mode 4 only and recognizes the human face or the human eye via the rear screen camera, the AOD interface may be displayed on the main screen for the time period (for example, 10 seconds). When the electronic device uses the mode 1 and the mode 4 and recognizes the human face or the human eye via the rear screen camera, the rear screen of the electronic device receives the light-touch operation and displays the AOD interface on the rear screen for the time period (for example, 10 seconds). When the electronic device uses the mode 2 and the mode 4, the AOD interface may be displayed on the rear screen until the electronic device is switched from the Doze state to the OFF state or the ON state. When the electronic device uses the mode 3 and the mode 4 and recognizes the human face or the human eye via the rear screen camera, the AOD interface may be displayed on the rear screen within the preset time period until the electronic device is switched from the Doze state to the OFF state or the ON state.

In a possible implementation, when the electronic device uses the mode 1 and the mode 4 and recognizes the human face or the human eye via the rear screen camera, the AOD interface may be displayed on the rear screen for the time period (for example, 10 seconds). That is, a first display on the rear screen may be triggered without performing the light-touch operation, and a next display on the rear screen needs to be triggered by performing the light-touch operation.

In a possible implementation, after S308 is performed, the electronic device may recognize the human face or the human eye via the main screen camera. When the human face and the human eye cannot be recognized via the rear screen camera, the AOD interface may be displayed on the main screen of the electronic device.

In a possible implementation, if the electronic device may recognize the human face or the human eye via both the main screen camera and the rear screen camera, the orientation of the screen of the electronic device may be further determined. Details are not described herein.

In a possible implementation, it can be learned from S307 or S308, when the electronic device is in the Doze state and the handheld state, the AOD interface may be displayed on the main screen or the rear screen on which the camera recognizing the human eye or the human face is located, provided that a specific camera of the electronic device recognizes the human eye or the human face. In this way, when the orientation of the screen of the electronic device is neither the main screen facing upward nor the rear screen facing upward, the AOD interface may be displayed by recognizing the human face or the human eye.

**S309: When the electronic device does not recognize the human face and the human eye, determine the orientation of the screen of the electronic device.**

In some implementations, when the electronic device is in the handheld state, the electronic device also does not recognize the human eye or the human face. It indicates that, in this case, light of an environment in which the electronic device is located is extremely dim, or at an angle between the user and the electronic device, the electronic device just cannot recognize the human face or the human eye, but the user may view content on the upward-screen of the electronic device. In this case, the electronic device may determine the orientation of the screen of the electronic device. For determining the orientation of the screen of the electronic device, refer to the related description in S303. Details are not described herein.

When the electronic device does not recognize the human face and the human eye, and it is determined that the orientation of the screen is that the main screen faces upward, S310 is performed. When the electronic device does not recognize the human face and the human eye, and the orientation of the screen is that the rear screen faces upward, S311 is performed.

**S310: When the main screen of the electronic device faces upward and a third condition for displaying the AOD interface is satisfied, display the AOD interface on the main screen.**

In some implementations, the third condition may include any one of the following: When the electronic device uses the mode 1, the main screen of the electronic device receives a light-touch operation; when the electronic device uses a mode 2, no operation needs to be received; or when the electronic device uses the mode 3, no operation needs to be received within the preset time period.

For the time for displaying the AOD interface in S310, refer to the foregoing description related to AOD. Specifically, when the electronic device uses the mode 1 and the main screen of the electronic device receives the light-touch operation, the AOD interface may be displayed on the main screen for a period of time (for example, 10 seconds). When the electronic device uses the mode 2, the AOD interface may be displayed on the main screen until the electronic device is switched from the Doze state to the OFF state or the ON state. When the electronic device uses the mode 3, the AOD interface may be displayed on the main screen within the preset time period until the electronic device is switched from the Doze state to the OFF state or the ON state.

In a possible implementation, if the orientation of the screen of the electronic device changes in the process in which the electronic device displays the AOD interface, a screen on which the electronic device displays the AOD interface is changed, and the time for displaying the AOD interface is also changed. For a specific implementation, refer to the related description in S304. Details are not described herein.

In a possible implementation, when the electronic device is in the handheld state and the main screen of the electronic device faces upward, although the rear screen of the electronic device receives the light-touch operation, the AOD interface is not displayed on the rear screen.

**S311: When the rear screen of the electronic device faces upward and a fourth condition for displaying the AOD interface is satisfied, display the AOD interface on the rear screen.**

In some implementations, the fourth condition may include any one of the following: When the electronic device uses the mode 1, the rear screen of the electronic device receives the light-touch operation; when the electronic device uses the mode 2, no operation needs to be received; or when the electronic device uses the mode 3, no operation needs to be received within the preset time period.

For the time for displaying the AOD interface in S311, refer to the foregoing description related to AOD. Specifically, when the electronic device uses the mode 1 and the rear screen of the electronic device receives the light-touch operation, the AOD interface may be displayed on the rear screen for the time period (for example, 10 seconds). When the electronic device uses the mode 2, the AOD interface may be displayed on the rear screen until the electronic device is switched from the Doze state to the OFF state or the ON state. When the electronic device uses the mode 3, the AOD interface may be displayed on the rear screen within the preset time period until the electronic device is switched from the Doze state to the OFF state or the ON state.

In a possible implementation, if the orientation of the screen of the electronic device changes in the process in which the electronic device displays the AOD interface, a screen on which the electronic device displays the AOD interface is changed, and the time for displaying the AOD interface is also changed. For a specific implementation, refer to the related description in S305. Details are not described herein.

In a possible implementation, when the electronic device is in the handheld state and the rear screen of the electronic device faces upward, although the main screen of the electronic device receives the light-touch operation, the AOD interface is not displayed on the main screen.

**S312: When the electronic device is in the unfolded state and a fifth condition for displaying the AOD interface is satisfied, display the AOD interface in full screen.**

In some implementations, the fifth condition may include any one of the following: When the electronic device uses the mode 1, the main screen of the electronic device receives a light-touch operation; when the electronic device uses a mode 2, no operation needs to be received; when the electronic device uses a mode 3, no operation needs to be received within a preset time period; when the electronic device uses a mode 4, the electronic device recognizes a human eye or a human face via a camera on the main screen; or when the electronic device uses both the mode 1 and a mode 4, the main screen of the electronic device receives a light-touch operation or recognizes a human eye or a human face via a camera on the main screen.

In the method, when the electronic device is in the folded state, it may determine whether the AOD interface is displayed on the main screen or the AOD interface is displayed on the rear screen, and it may further determine when the AOD interface is displayed and a display duration. In addition, when the user is holding the electronic device, it may more accurately recognize the screen of the electronic device that is used to display the AOD interface. In this way, the usage of the user may be fully considered, to satisfy, to a greater extent, a requirement that the user views the AOD interface on a screen facing the user.

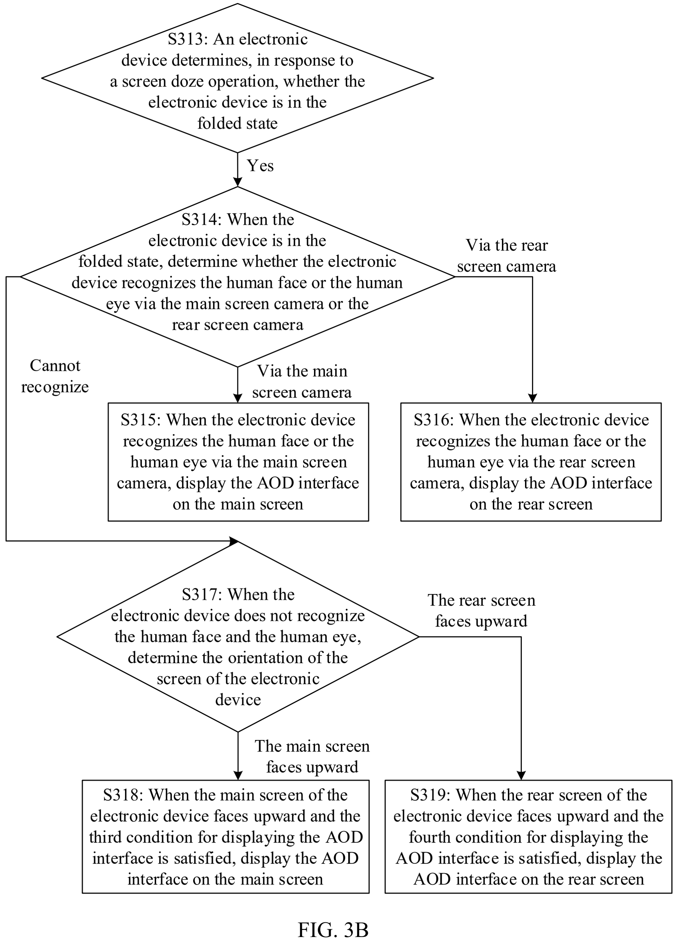

The following describes another always on display method with reference to FIG. 3B. The following describes the another always on display method provided in an embodiment of this application with reference to FIG. 3B.

S313: The electronic device determines, in response to the screen doze operation, whether the electronic device is in the folded state.

For the related description of S313, refer to the detailed description of S301. Details are not described herein.

S314: When the electronic device is in the folded state, determine whether the electronic device recognizes the human face or the human eye via the main screen camera or the rear screen camera.

When the electronic device uses only the mode 4 to implement the AOD function and the electronic device is in the folded state, the electronic device enables the functions of the main screen camera and the rear screen camera for recognizing the human face or the human eye. When the main screen camera of the electronic device recognizes the human face or the human eye, S315 is performed. When the rear screen camera of the electronic device recognizes the human face or the human eye, S316 is performed. When both the main screen camera and the rear screen camera of the electronic device do not recognize the human face and the human eye, S317 is performed.

S315: When the electronic device recognizes the human face or the human eye via the main screen camera, display the AOD interface on the main screen.

For the related description of S315, refer to the detailed description of S307. Details are not described herein.

S316: When the electronic device recognizes the human face or the human eye via the rear screen camera, display the AOD interface on the rear screen.

For the related description of S316, refer to the detailed description of S308. Details are not described herein.

S317: When the electronic device does not recognize the human face and the human eye, determine the orientation of the screen of the electronic device.

For the related description of S317, refer to the detailed description of S309. Details are not described herein.

S318: When the main screen of the electronic device faces upward and the third condition for displaying the AOD interface is satisfied, display the AOD interface on the main screen.

For the related description of S318, refer to the detailed description of S310. Details are not described herein.

S319: When the rear screen of the electronic device faces upward and the fourth condition for displaying the AOD interface is satisfied, display the AOD interface on the rear screen.

For the related description of S319, refer to the detailed description of S311. Details are not described herein.

During the foregoing method procedure, the electronic device may first consider actual needs of the user and recognize the human eye or the human face to display the AOD interface; and may then determine the orientation of the screen of the electronic device as an auxiliary basis for displaying the AOD interface. In a possible implementation, whether the electronic device is in the handheld or the non-handheld state does not need to be determined.

In this embodiment of this application, when the electronic device is in the folded state, the main screen and the rear screen do not both display the AOD interface at the same time. However, the main screen and the rear screen may display a same AOD interface at different moments. Because a size of the main screen is not the same as a size of the rear screen, sizes of elements in the same AOD interface displayed on the main screen and the rear screen may not be the same.

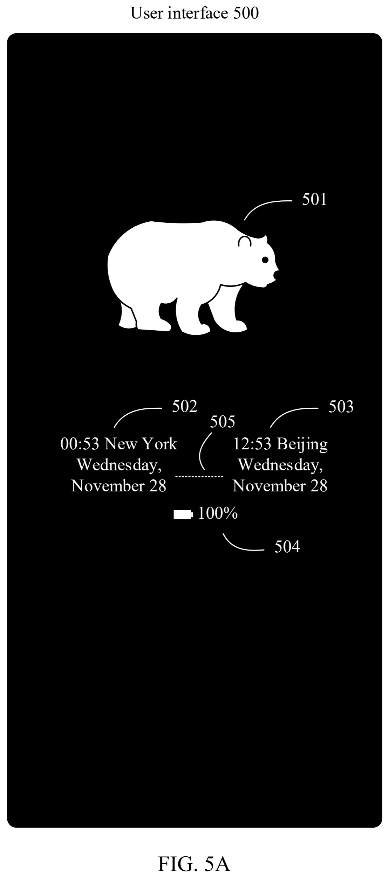

The following describes several AOD interfaces provided in embodiments of this application with reference to FIG. 5A to FIG. 9B.

FIG. 5A shows an AOD interface displayed by an electronic device on a main screen. As shown in FIG. 5A, a user interface 500 is the AOD interface displayed by the electronic device on the main screen. The user interface 500 may include, but is not limited to: icon 501, date and time 502, date and time 503, battery level 504, and the like. The electronic device may select, from a plurality of preset themes in response to a user operation, a preset theme to which the icon 501 belongs. That is, the icon 501 is preset by the electronic device. The date and time 502 and the date and time 503 may indicate dates and times of different regions at a same moment. Divider 505 is used to indicate spacing between the date and time 502 and the date and time 503. For example, the date and time 502 displays text content "00:53 New York Wednesday, November 28", and the date and time 503 displays text content "12:53 New York Wednesday, November 28". The battery level 504 indicates that a current battery level of the electronic device is 100%.

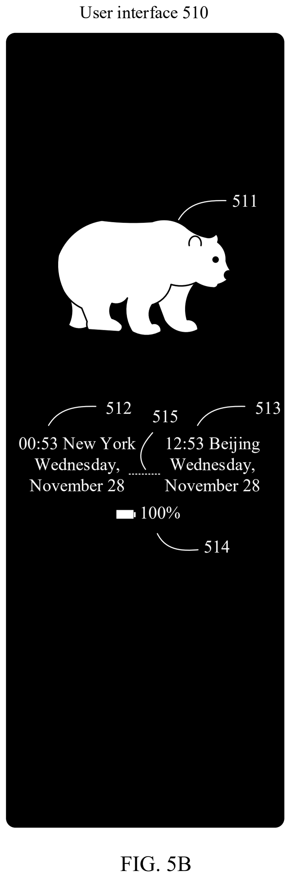

FIG. 5B shows an AOD interface displayed by the electronic device on a rear screen. As shown in FIG. 5B, a user interface 510 is the AOD interface displayed by the electronic device on the rear screen. Because the AOD interfaces are the same, the user interface 510 includes the same types of elements as the user interface 500. Likewise, the user interface 510 may include, but is not limited to: icon 511, date and time 512, date and time 513, battery level 514, and the like. Divider 515 is used to indicate spacing between the date and time 512 and the date and time 513.

In some implementations, when an icon in the AOD interface is preset by the electronic device, that is, a theme to which the icon belongs is preset by the electronic device, a size of the icon in the AOD interface displayed on the main screen is the same as a size of the icon in the AOD interface displayed on the rear screen. For example, a size of the icon 501 is the same as a size of the icon 511. When a dual clock text is displayed in the AOD interface, that is, dates and times of two regions are displayed in the AOD interface, a text size of the date and time in the AOD interface displayed on the rear screen is 85% of a text size of the date and time in the AOD interface displayed on the main screen. For example, a text size of the date and time 512 is 85% of a text size of the date and time 502, and a text size of the date and time 513 is 85% of a text size of the date and time 503. In this embodiment of this application, the percentage of 85% is merely an example for description, and may alternatively be another percentage, for example, any value from 70% to 90%, provided that the text can be completely displayed on the rear screen and the text displayed on the rear screen is smaller than the text displayed on the main screen, which is not limited. Optionally, when the dual clock text is displayed in the AOD interface, a size of a divider between two clock texts in the AOD interface displayed on the rear screen is also 85% of a size of a divider between two clock texts in the AOD interface displayed on the main screen. For example, a size of the divider 515 is 85% of a size of the divider 505.

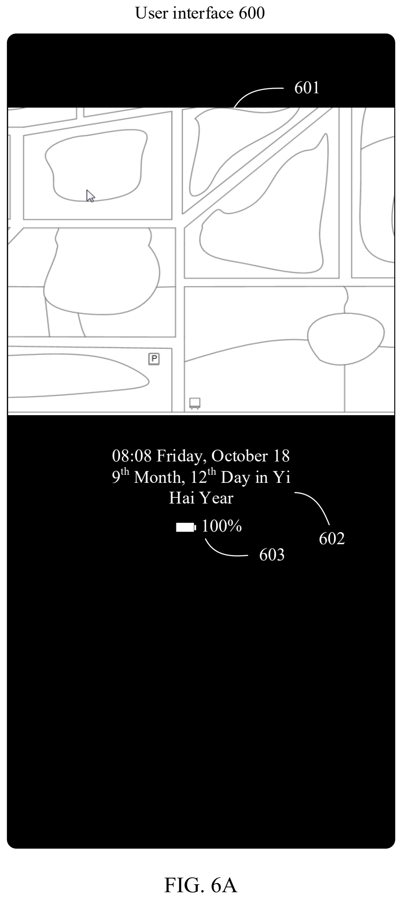

FIG. 6A shows another AOD interface displayed by the electronic device on the main screen. As shown in FIG. 6A, a user interface 600 is the AOD interface displayed by the electronic device on the main screen. The user interface 600 may include, but is not limited to: icon 601, date and time 602, battery level 603, and the like. The electronic device may select, from a plurality of third-party themes in response to a user operation, a third-party theme to which the icon 601 belongs. That is, the icon 601 may belong to a theme provided by a third-party application downloaded by the electronic device. The date and time 602 may indicate a date and a time of a region at a moment. For example, the date and time 602 displays text content "08:08 Friday, October 18 9^{th} Month, 12^{th} Day in Yi Hai Year". The battery level 603 indicates that a current battery level of the electronic device is 100%.

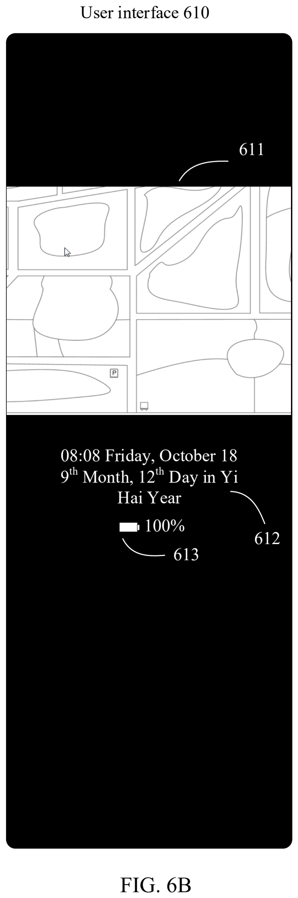

FIG. 6B shows an AOD interface displayed by the electronic device on the rear screen. As shown in FIG. 6B, a user interface 610 is the AOD interface displayed by the electronic device on the rear screen. Because the AOD interfaces are the same, the user interface 610 includes the same types of elements as user interface 600. Likewise, the user interface 610 may include, but is not limited to: icon 611, date and time 612, battery level 613, and the like.

In some implementations, when the icon in the AOD interface is provided by the third-party application downloaded by the electronic device or is an image in an album application downloaded by the electronic device, the icon may maximally fill the screen. A width of the icon in the AOD interface displayed on the main screen is the same as a width of the main screen, and a width of the icon in the AOD interface displayed on the rear screen is the same as a width of the rear screen. That is, an aspect ratio of the icon in the AOD interface displayed on the main screen is the same as an aspect ratio of the icon in the AOD interface displayed on the rear screen. For example, an aspect ratio of the icon 601 is the same as an aspect ratio of the icon 611. When a single clock text is displayed in the AOD interface, that is, when a date and a time of one region is displayed in the AOD interface, a text size of the date and time in the AOD interface displayed on the rear screen is the same as a text size of the date and time in the AOD interface displayed on the main screen. For example, a text size of the date and time 612 is the same as a text size of the date and time 602.

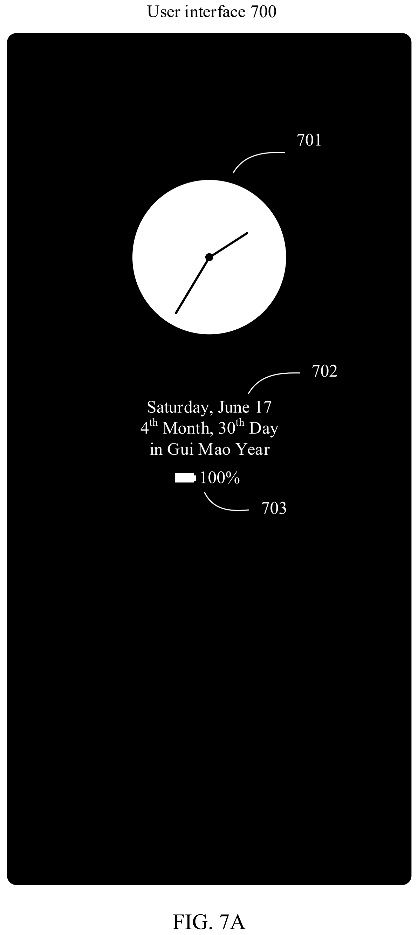

FIG. 7A shows another type of an AOD interface displayed by the electronic device on the main screen. As shown in FIG. 7A, a user interface 700 is the AOD interface displayed by the electronic device on the main screen. The user interface 700 may include, but is not limited to: a clock icon 701, a date 702, a battery level 703, and the like. The electronic device may select the clock icon 701 from a plurality of preset always on display icons in response to a user operation. That is, the clock icon 701 may be preset by the electronic device. The date 702 may indicate a date for a region. For example, the clock icon 701 indicates that a current time is 02:35, and the date 702 displays text content "Saturday, June 17, 4^{th} Month, 30^{th} Day in Gui Mao Year". The battery level 703 indicates that the current battery level of the electronic device is 100%.

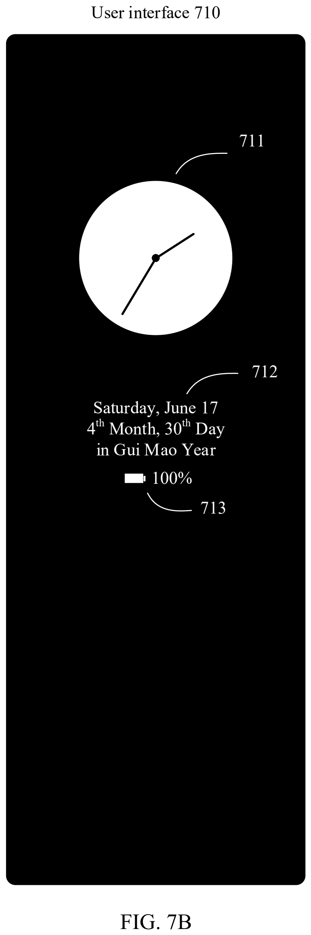

FIG. 7B shows an AOD interface displayed by the electronic device on the rear screen. As shown in FIG. 7B, a user interface 710 is the AOD interface displayed by the electronic device on the rear screen. Because of the same AOD interface, a type of each element included in the user interface 710 is the same as a type of each element included in the user interface 700. Likewise, the user interface 710 may include, but is not limited to: a clock icon 711, a date 712, a battery level 713, and the like.

In some implementations, when a clock icon in the AOD interface is preset by the electronic device, a size of the clock icon in the AOD interface displayed on the main screen is the same as a size of the clock icon in the AOD interface displayed on the rear screen. For example, a size of the clock icon 701 is the same as a size of the clock icon 711. When a single date text is displayed in the AOD interface, that is, when the date or the region is displayed in the AOD interface, the text size of the date in the AOD interface displayed on the rear screen is the same as the text size of the date in the AOD interface displayed on the main screen. For example, a text size of the date 702 is the same as a text size of the date 712.

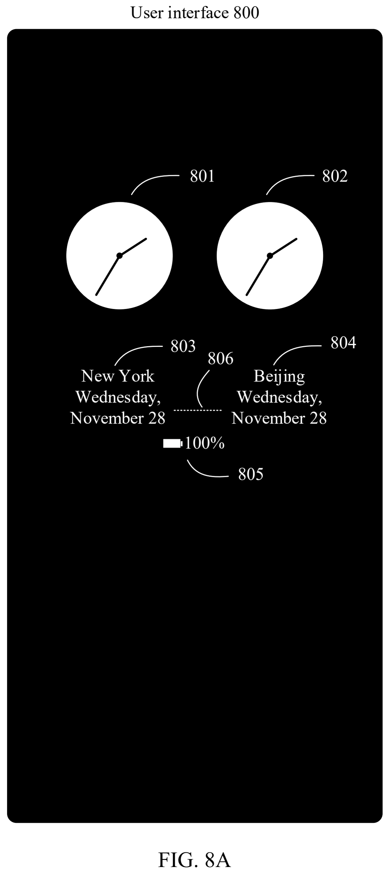

FIG. 8A shows another type of an AOD interface displayed by the electronic device on the main screen. As shown in FIG. 8A, a user interface 800 is the AOD interface displayed by the electronic device on the main screen. The user interface 800 may include, but is not limited to: a clock icon 801, a clock icon 802, a date and region 803, a date and region 804, a battery level 805, and the like. The electronic device may select the clock icon 801 and the clock icon 802 from the plurality of preset always on display icons in response to a user operation. That is, the clock icon 801 and the clock icon 802 may be preset by the electronic device. The date and region 803 may indicate a date for a region, and the date and region 804 may indicate a date for another region. For example, the clock icon 801 indicates that the current time is 02:35, the clock icon 802 indicates that the current time is 14:35, the date and region 803 displays text content "New York Wednesday, November 28", and the date and region 804 displays text content "Beijing Wednesday, November 28". A divider 806 is used to indicate spacing between the date and region 803 and the date and region 804. The battery level 805 indicates that the current battery level of the electronic device is 100%.

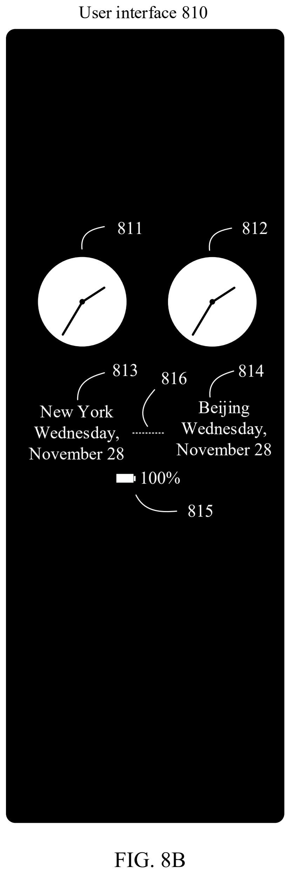

FIG. 8B shows an AOD interface displayed by the electronic device on the rear screen. As shown in FIG. 8B, a user interface 810 is the AOD interface displayed by the electronic device on the rear screen. Because of the same AOD interface, a type of each element included in the user interface 810 is the same as a type of each element included in the user interface 800. Likewise, the user interface 810 may include, but is not limited to: a clock icon 811, a clock icon 812, a date and region 813, a date and region 814, a battery level 815, and the like. A divider 816 is used to indicate spacing between the date and region 813 and the date and region 814.

In some implementations, when the AOD interface displays two clock icons preset by the electronic device, sizes of the two clock icons in the AOD interface displayed on the rear screen are 85% of text sizes of the two clock icons in the AOD interface displayed on the main screen. For example, a size of the clock icon 811 is 85% of a size of the clock icon 801, and a size of the clock icon 812 is 85% of a size of the clock icon 802. When a dual date and region text is displayed in the AOD interface, that is, dates of two regions are displayed in the AOD interface, a text size of the date in the AOD interface displayed on the rear screen is 85% of a text size of the date in the AOD interface displayed on the main screen. For example, a text size of the date and region 813 is 85% of a text size of the date and region 803, and a text size of the date and region 814 is 85% of a text size of the date and region 804. In this embodiment of this application, the percentage of 85% is merely an example for description, and may alternatively be another percentage, for example, any value from 70% to 90%, provided that the text can be completely displayed on the rear screen and the text displayed on the rear screen is smaller than the text displayed on the main screen, which is not limited. Optionally, when the dual date and region text is displayed in the AOD interface, a size of a divider between two date and region texts in the AOD interface displayed on the rear screen is also 85% of a size of a divider between two date and region texts in the AOD interface displayed on the main screen. For example, a size of the divider 816 is 85% of a size of the divider 806.

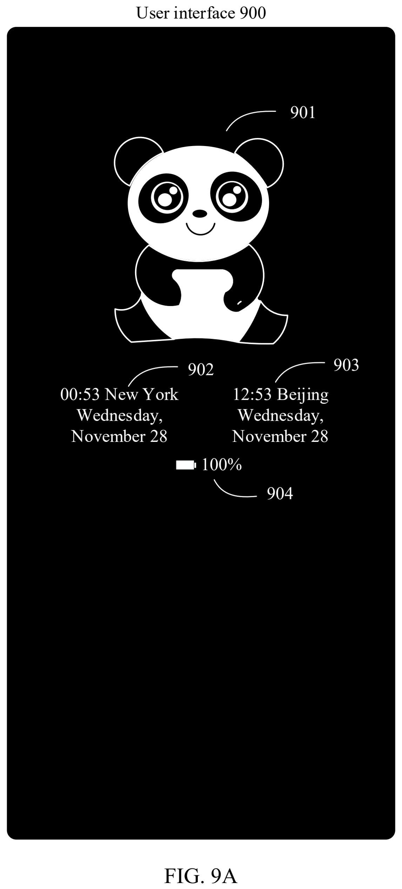

FIG. 9A shows another type of an AOD interface displayed by the electronic device on the main screen. As shown in FIG. 9A, a user interface 900 is the AOD interface displayed by the electronic device on the main screen. The user interface 900 may include, but is not limited to: an icon 901, a date and time 902, a date and time 903, a battery level 904, and the like.

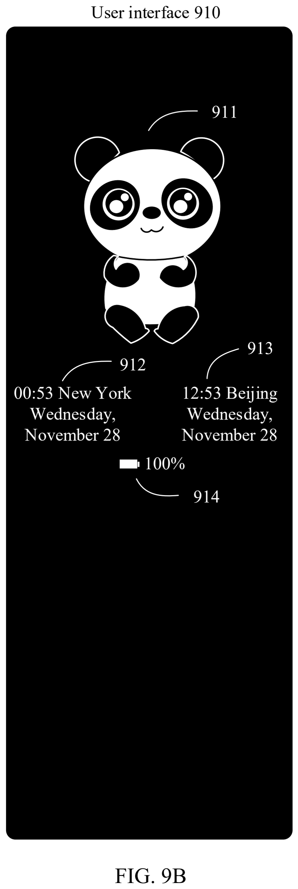

FIG. 9B shows another type of an AOD interface displayed by the electronic device on the rear screen. As shown in FIG. 9B, a user interface 910 is the AOD interface displayed by the electronic device on the rear screen. Because of the same AOD interface, a type of each element included in the user interface 910 is the same as a type of each element included in the user interface 900. Likewise, the user interface 910 may include, but is not limited to: an icon 911, a date and time 912, a date and time 913, a battery level 914, and the like. The icon 901 and the icon 911 are not a same icon, and may be referred to as a set of always on display icons.

In some implementations, a preset theme in the electronic device includes the set of always on display icons. That is, an icon in the AOD interface displayed by the electronic device on the main screen and an icon in the AOD interface displayed on the rear screen belong to a same preset theme. The set of the always on display icons of the same preset theme may include two or more always on display icons. For example, the icon 901 and the icon 911 may belong to a same preset theme, and may be considered as a set of always on display icons. In this way, the diversity of the AOD interface that the user views can be increased, and a sense of freshness can be added.

In this embodiment of this application, the AOD interface displayed on the rear screen may be referred to as a first AOD interface. The AOD interface displayed on the main screen may be referred to as a second AOD interface. When the electronic device is in the unfolded state, an AOD interface displayed on a screen including the main screen and the rear screen may be referred to as a third AOD interface. An icon that is preset by the electronic device and displayed in the AOD interface, that is, an always on display icon provided by a system application, may be referred to as a first icon and a second icon. An icon that is provided by the third-party application downloaded by the electronic device and displayed in the AOD interface may be referred to as a third icon. Date, time, text and areas displayed in the AOD interface may be referred to as a first text and a second text. Different always on displays that belong to a same set of themes may be referred to as a fourth icon and a fifth icon.

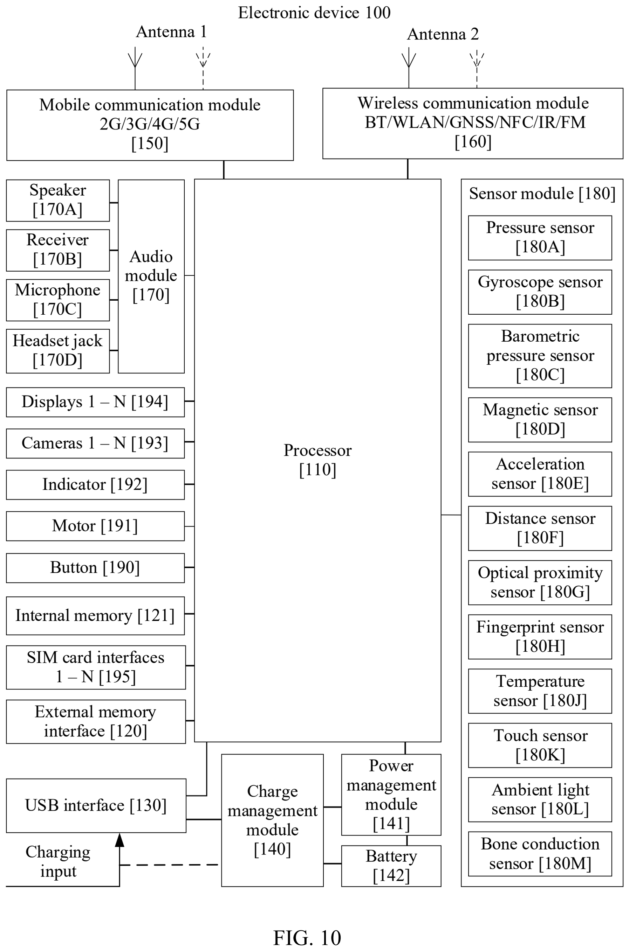

FIG. 10 shows a schematic diagram of a structure of an electronic device 100.

The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It can be understood that the structure illustrated in an embodiment of the present invention does not constitute a specific limitation on the electronic device 100. In some other embodiments of this application, the electronic device 100 may include more or fewer components than those shown in the figure, some components may be combined, or some components may be divided, or different component arrangements may be used. The components in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-network Processing Unit, NPU). Different processing units may be independent devices, or may be integrated into one or more processors.

In some implementations, the processor 110 may be used to determine whether the electronic device 100 is in a folded state, the processor 110 is further used to determine whether the electronic device 100 is in a handheld state, the processor 110 may further be used to determine an orientation of a screen of the electronic device, and the processor 110 may further be used to determine whether a human face or a human eye is recognized via a main screen camera or a rear screen camera.

A storage may be further disposed in the processor 110 to store instructions and data. In some embodiments, the memory in processor 110 is a cache. The storage may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between modules illustrated in this embodiment of the present invention is merely an example for description, and does not constitute a limitation on the structure of the electronic device 100. In some other embodiments of this application, the electronic device 100 may use an interface connection manner different from that in the above embodiments, or use combinations of a plurality of interface connection manners.

The charge management module 140 is configured to receive charging input from a charger. The charger may be a wireless charger, or may be a wired charger. In some embodiments of wired charging, the charge management module 140 may receive charging input from a wired charger through the USB interface 130. In some embodiments of wireless charging, the charge management module 140 may receive wireless charging inputted through a wireless charging coil of the electronic device 100. When charging the battery 142, the charge management module 140 may further supply power to the electronic device through the power management module 141.

The power management module 141 is configured to connect the battery 142 and the charge management module 140 to the processor 110. The power management module 141 receives an input from the battery 142 and/or an input from the charge management module 140, and supplies power to the processor 110, the internal memory 121, the display 194, the camera 193, the wireless communication module 160, and the like. The power management module 141 may further be configured to monitor parameters such as a battery capacity, a quantity of battery cycles, and a battery health state (power leakage and impedance). In some other embodiments, the power management module 141 may be arranged in the processor 110. In some other embodiments, the power management module 141 and the charge management module 140 may also be arranged in the same device.

A wireless communication function of the electronic device 100 may be implemented by the antenna 1, the antenna 2, the mobile communication module 150, the wireless communication module 160, the modem, the baseband processor, etc.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (LNA), etc. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some function modules of the mobile communication module 150 may be arranged in the processor 110. In some embodiments, at least some of the functional modules of the mobile communication module 150 may be disposed in a same device as at least some of the modules of the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be a separate device. In some other embodiments, the modem processor may be independent of the processor 110 and may be disposed in a same device as the mobile communication module 150 or another functional module.

The wireless communication module 160 may provide a solution to wireless communication applied to the electronic device 100 and including wireless local area networks (WLAN) (such as wireless fidelity (Wi-Fi)), Bluetooth (BT), a global navigation satellite system (GNSS), frequency modulation (FM), near field communication (NFC), and an infrared (IR) technology. The wireless communication module 160 may be one or more components integrating at least one communication processor module. The wireless communication module 160 receives an electromagnetic wave by using the antenna 2, performs modulation and filtering processing on an electromagnetic wave signal, and sends a processed signal to the processor 110. The wireless communication module 160 may further receive a to-be-transmitted signal from the processor 110, conduct frequency modulation and amplification on the to-be-transmitted signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing and connects the display 194 and the application processor. The GPU is configured to perform mathematical and geometric computing for graphics rendering. The processor 110 may include one or more GPUs that perform program instructions to generate or change display information.

The display 194 is configured to display an image, a video, or the like. The display 194 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include 1 or N displays 194, where N is a positive integer greater than 1.

The electronic device 100 may implement a photographing function by using the ISP, the camera 193, the video encoder and decoder, the GPU, the display 194, the application processor, and the like.

The ISP is configured to handle data returned by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on a noise point, brightness, and color of the image. The ISP may further optimize parameters such as exposure and a color temperature of a photographing scene. In some embodiments, the ISP may be provided in the camera 193.

The camera 193 is configured to capture a still image or video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in standard RGB and YUV formats. In some embodiments, the electronic device 100 may include 1 or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform, and the like on frequency energy.

The video encoder and decoder are configured to compress or decompress a digital video. The electronic device 100 can support one or more types of video encoders and decoders. In this way, the electronic device 100 may play or record videos in a plurality of encoding formats, for example, moving picture experts group (moving picture experts group, MPEG) 1, MPEG 2, MPEG 3, and MPEG 4.

The NPU is a neural network (neural-network, NN) computing processor to quickly process input information by learning from a structure of a biological neural network, for example, a mode of transmission between neurons in a human brain, and to further continuously perform self-learning. Applications such as intelligent cognition of the electronic device 100, for example, image recognition, facial recognition, voice recognition, and text understanding, may be implemented by using the NPU.

The internal memory 121 may be one or more random access memories (random access memory, RAM), and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory

(double data rate synchronous dynamic random access memory, DDR SDRAM, for example, the fifth DDR SDRAM is usually known as DDR5 SDRAM), and the like. The non-volatile memory may include a magnetic disk storage device, and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to a quantity of voltage levels per cell, or may be divided into a universal flash storage (universal flash storage, UFS), an embedded multimedia card (embedded multi media Card, eMMC), and the like according to a storage specification.

The random access memory may be directly read and written by the processor 110, may be configured to store executable programs (for example, machine instructions) of an operating system or other running programs, or may be configured to store data of users and applications.

The non-volatile memory may also store executable programs, data of users and applications, and the like, and may be loaded into the random access memory in advance for the processor 110 to perform direct reading and writing.

The external memory interface 120 may be configured to connect to an external non-volatile memory, to extend a storage capability of the electronic device 100. The external non-volatile memory communicates with the processor 110 via the external memory interface 120, to implement a data storage function. For example, a file such as music or a video is stored in the external non-volatile memory.

The electronic device 100 may implement an audio function by using the audio module 170, the speaker 170A, the receiver 170B, the microphone 170C, the headset jack 170D, the application processor, and the like. For example, music playback or audio recording is implemented.

The audio module 170 is configured to convert digital audio information into an analog audio signal output, and also configured to convert an analog audio input into a digital audio signal. The audio module 170 may be further configured to encode and decode the audio signal. In some embodiments, the audio module 170 may be arranged in the processor 110, or some functional modules of the audio module 170 are arranged in the processor 110.

The pressure sensor 180A is configured to sense a pressure signal, and may convert the pressure signal to an electrical signal.

The gyroscope sensor 180B may be configured to determine a moving posture of the electronic device 100. In some embodiments, angular velocities of the electronic device 100 around three axes (namely, an x axis, a y axis, and a z axis) may be determined by using the gyroscope sensor 180B. The gyroscope sensor 180B may be used for image stabilization during shooting. For example, when the shutter is pressed, the gyroscope sensor 180B detects an angle of jitter of the electronic device 100, and calculates a distance to be compensated by a lens module needs to compensate based on the angle, and allows the lens to cancel the jitter of the electronic device 100 through reverse motion, thereby implementing image stabilization. The gyroscope sensor 180B may be further used in scenarios of navigation and a motion sensing game.

In some implementations, the gyroscope sensor 180B may be used to obtain an angular velocity and send the angular velocity to the processor 110, to facilitate the processor 110 in determining a screen posture.

The barometric pressure sensor 180C is configured to measure a barometric pressure. In some embodiments, the electronic device 100 calculates an altitude through an air pressure value measured by the barometric pressure sensor 180C, to assist in positioning and navigation.

The magnetic sensor 180D includes a Hall sensor. The electronic device 100 may detect opening and closing of a flip leather case by the magnetic sensor 180D. In some embodiments, when the electronic device 100 is a clamshell phone, the electronic device 100 may detect opening and closing of a flip cover according to the magnetic sensor 180D. Features such as automatic unlocking of the flip cover are further set according to the detected opening and closing state of the holster or opening and closing state of the flip cover.

In some implementations, the magnetic sensor 180D may be used to determine a magnetic field strength between a main screen and a secondary screen, and send that magnetic field strength to the processor 110, to facilitate the processor 110 in determining the screen posture.

The acceleration sensor 180E may detect magnitudes of acceleration in various directions (usually on three axes) of the electronic device 100, may detect a magnitude and a direction of gravity when the electronic device 100 is still, The acceleration sensor 180E may be further configured to recognize a posture of the electronic device, and is used in an application such as switching between a landscape mode and a portrait mode or a pedometer.

In some implementations, the acceleration sensor 180E may be used to obtain an acceleration, and send the acceleration to the processor 110, to facilitate the processor 110 in determining the screen posture.

The distance sensor 180F is configured to measure a distance. The electronic device 100 may measure the distance by using infrared or lasers. In some embodiments, in a shooting scenario, the electronic device 100 may measure a distance by using the distance sensor 180F, to implement quick focusing.

The optical proximity sensor 180G may include, for example, a light-emitting diode (LED) and a light detector such as a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, the electronic device may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

In some implementations, the optical proximity sensor 180G may be used to obtain light variation data from an electronic device held by the user, to facilitate the processor 110 in further determining that the electronic device is in the handheld state.

The ambient light sensor 180L is configured to sense ambient light brightness.

The fingerprint sensor 180H is configured to collect a fingerprint.

A temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is lower than still another threshold, the electronic device 100 boosts an output voltage of the battery 142 to prevent abnormal shutdown caused by a low temperature.

In some implementations, the temperature sensor 180J may further be used to obtain a temperature of the electronic device held by the user, to facilitate the processor 110 in further determining that the electronic device is in the handheld state.

The touch sensor 180K is alternatively referred to as a "touch device". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided by using the display 194. In some other embodiments, the touch sensor 180K may be alternatively disposed on the surface of the electronic device 100 in a position different from that of the display 194.

In some implementations, the touch sensor 180K may be used to obtain a touch operation, and send, to the processor 110, a specific location on which the touch operation is received. The touch sensor 180K may further be used to acquire a light-touch operation in a screen-doze state.

The bone conduction sensor 180M may obtain a vibration signal.

The button 190 includes a power button, a volume button, or the like.

The motor 191 may generate a vibrating alert. The motor 191 may be used for an incoming call vibration prompt, or may be used for a touch vibration feedback.

The indicator 192 may be an indicator light, and may be configured to indicate a charging status or a battery level change, or may be configured to indicate a message, a missed call, a notification, and the like.

A software system of the electronic device 100 may use a layered architecture, an event-driven architecture, a micro kernel architecture, a micro service architecture, or a cloud architecture. In the embodiments of the present invention, an Android system with a layered architecture is used as an example to describe a software structure of the electronic device 100.

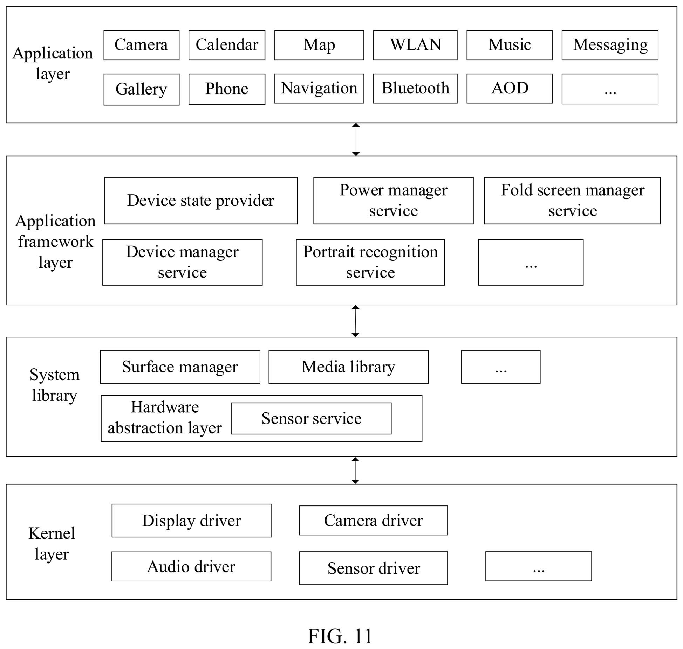

FIG. 11 is a block diagram of the software structure of the electronic device 100 according to an embodiment of the present invention.

In the layered architecture, software is divided into several layers, and each layer has a clear role and task. Layers communicate with each other through a software interface. In some embodiments, an Android system is divided into four layers: an application layer, an application framework layer, a system library, and a kernel layer from top to bottom.

An application program layer may include a series of application program packages.

As shown in FIG. 11, the application packages may include applications such as camera, photos, calendar, calls, map, navigation, WLAN, Bluetooth, music, AOD, and SMS messages. The AOD application may detect a screen posture of a device and a handheld state or a non-handheld state of an electronic device, and display an AOD interface.

The application framework layer provides an application programming interface (application programming interface, API) and a programming framework for an application at the application layer. The application framework layer includes some predefined functions.

As shown in FIG. 11, the application framework layer may include a device state provider (Device State Provider), a fold screen manager service (Fold Screen Manager Service), a power manager service (Power Manager Service), a device manager service (Device Manager Service), a portrait recognition service, and the like.

The device state provider is used to provide the screen posture, for example, an unfolded state, a folded state, and the like. Specifically, the device state provider may obtain posture sensor data (for example, an angle between the main screen and the rear screen), Hall sensor data (for example, the magnetic field strength between the main screen and the rear screen), and the like from the hardware abstraction layer, and determine a current screen posture based on the sensor data. The device state provider may further be used to determine whether the electronic device is in the handheld state. Specifically, the device state provider may obtain touch sensor data, temperature sensor data, proximity light sensor data, and the like from hardware abstraction layer, and determine, based on the touch sensor data, the temperature sensor data, the proximity light sensor data, and the like from the hardware abstraction layer, whether the electronic device is currently in the handheld state.

The fold screen manager service is used to manage display of a screen of an electronic device with an outward-foldable screen, and may display a user interface on a main screen, a rear screen or full screen based on coordinates that are determined based on a dual-screen (that is, the main screen and rear screen) display solution. For example, the fold screen manager service may display an AOD interface on a main screen of an outward foldable mobile phone, display an AOD interface on a rear screen of an outward foldable mobile phone, or display an AOD interface on full screen of an outward foldable mobile phone. Certainly, the fold screen manager service may display a user interface on the main screen of the outward foldable mobile phone in a screen-on manner, which is not limited herein.

The power manager service is one of system services responsible for management and coordination of the power management of the device. Common functions such as screen-on, screen-off, brightness adjustment, a low battery level mode, and keeping CPU awake are coordinated and handled by the power manager service. For example, the power manager service may monitor a change between the screen-on state and the screen-off state, to control the start and end of the displaying of the AOD interface. In this embodiment of this application, a screen state of the electronic device may include a screen-off state, a screen-on state, and a screen-doze state. The screen-off state (OFF state) indicates that the screen of the electronic device is off; the screen-on state (ON state) indicates that the screen of the electronic device is on; and the screen-doze state (Doze state) indicates that the screen of the electronic device is off and in a low-power state. A change between the screen-on state and the screen-off state may include switching the screen from the ON state to the OFF state, or from the ON state to the Doze state, or from the OFF state to the Doze state, or from the Doze state to the ON state, or from the OFF state to the ON state, or the like.

The device manager service is used to provide an orientation of the screen of the device. For example, the main screen of the outward foldable mobile phone faces upward, the main screen of the outward foldable mobile phone faces downward, or the like. Specifically, data such as a posture angle and an acceleration may be obtained from the hardware abstraction layer, and an orientation of a screen of a current device is determined based on the data.

The portrait recognition service may be used to recognize, based on data captured via a camera sensor, whether a portrait is captured by the camera. In addition, the portrait recognition service may further determine whether a human face or a human eye is captured via a main screen camera or a rear screen camera.

The kernel library includes two parts: one part is a performance function that a java language needs to invoke, and the other part is a kernel library of android.

The application program layer and the application program framework layer run in the virtual machine. The virtual machine executes java files at the application program layer and the application program framework layer as binary files. The virtual machine is used to execute functions such as object lifecycle management, stack management, thread management, security and exception management, and garbage collection.

The system library may include a plurality of functional modules such as a surface manager (surface manager), a media library (Media Libraries), and the like.

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video encoding formats, such as MPEG4, H.264, MP3, AAC, AMR, JPG, and PNG.

The hardware abstraction layer is an interface layer between an operating system kernel and a hardware circuit, and is used for hardware abstraction. The hardware abstraction layer hides hardware interface details of a specific platform, and provides a virtual hardware platform for an operating system. The hardware abstraction layer may include a sensor service (Sensor Service) and the like. The sensor service may provide the sensor data, the posture angle, the acceleration, and other information, for example, provide the sensor data to the device state provider and provide the posture angle, the acceleration, and the other information to the device manager service.

The kernel layer is a layer between hardware and software. The kernel layer includes at least a display drive, a camera drive, an audio drive, and a sensor drive.

Various implementations of this application may be combined randomly to achieve different technical effects.

All or some of the foregoing embodiments may be implemented by software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or in a wireless manner (for example, through infrared rays, radio, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes various media that can store program code, for example, a ROM, a random access memory RAM, a magnetic disk, or an optical disc.

In conclusion, the descriptions above are merely embodiments of the technical solutions of the present invention, but are not intended to limit the protection scope of the present invention. Any modifications, equivalent replacements, improvements, or the like made based on the present disclosure of the present invention shall fall within the protection scope of the present invention.

## Claims

1. An always on display method, applied to an electronic device, wherein the electronic device comprises a main screen, a rear screen, a main screen camera, and a rear screen camera, the main screen is connected to the rear screen via a folding member, an orientation of the main screen camera is the same as an orientation of the main screen, an orientation of the rear screen camera is opposite to the orientation of the main screen, and the method comprises:
detecting a first screen doze operation when the electronic device is in a folded state, wherein in the folded state, the main screen and the rear screen both face outward from the electronic device;
activating the main screen camera and the rear screen camera;
displaying a first AOD interface on the rear screen, if the rear screen camera captures an image comprising a human eye and/or a human face, and the main screen camera does not capture an image comprising a human eye and/or a human face; and
displaying a second AOD interface on the main screen, if the main screen camera captures an image comprising a human eye and/or a human face, and the rear screen camera does not capture an image comprising a human eye and/or a human face.

2. The method according to claim 1, wherein the method further comprises:
determining the orientation of the main screen and an orientation of the rear screen, if the main screen camera captures an image comprising a human eye and/or a human face, and the rear screen camera captures an image comprising a human eye and/or a human face; and
displaying the first AOD interface on the rear screen if the rear screen faces upward; or
displaying the second AOD interface on the main screen if the main screen faces upward, wherein upward is a direction opposite to perpendicularly pointing toward the ground.

3. The method according to claim 1 or 2, wherein the method further comprises:
determining the orientation of the main screen and the orientation of the rear screen, if the main screen camera does not capture an image comprising a human eye and/or a human face, and the rear screen camera does not capture an image comprising a human eye and/or a human face; and
if the rear screen faces upward, displaying the first AOD interface on the rear screen in response to the rear screen facing upward, or displaying the first AOD interface on the rear screen after receiving a touch operation performed on the rear screen, or displaying the first AOD interface on the rear screen after entering a preset time period;
if the main screen faces upward, displaying the second AOD interface on the main screen in response to the main screen facing upward, or displaying the second AOD interface on the main screen after receiving a touch operation performed on the main screen, or displaying the second AOD interface on the main screen after entering the preset time period, wherein upward is the direction opposite to perpendicularly pointing toward the ground.

4. The method according to any one of claims 1 to 3, wherein when the first screen doze operation is detected, the electronic device is held by a user.

5. The method according to claim 4, wherein the method further comprises:
detecting a first screen doze operation when the electronic device is in the folded state and not held by the user;
determining the orientation of the main screen and the orientation of the rear screen; and
if the rear screen faces upward, displaying the first AOD interface on the rear screen in response to the rear screen facing upward, or displaying the first AOD interface on the rear screen after receiving a touch operation performed on the rear screen, or displaying the first AOD interface on the rear screen after entering the preset time period, or activating the rear screen camera and displaying the first AOD interface on the rear screen when the rear screen camera captures an image comprising a human eye and/or a human face;
if the main screen faces upward, displaying the second AOD interface on the main screen in response to the main screen facing upward, or displaying the second AOD interface on the main screen after receiving a touch operation performed on the main screen, or displaying the second AOD interface on the main screen after entering the preset time period, or activating the main screen camera and displaying the second AOD interface on the main screen when the main screen camera captures an image comprising a human eye and/or a human face, wherein upward is the direction opposite to perpendicularly pointing toward the ground.

6. The method according to any one of claims 1 to 5, wherein the method further comprises:
detecting a third screen doze operation when the electronic device is in an unfolded state, wherein in the unfolded state, the orientation of the main screen is the same as the orientation of the rear screen; and
displaying a third AOD interface on a screen in response to the orientation of the main screen being the same as the orientation of the rear screen, or displaying the third AOD interface on the screen after receiving a touch operation performed on the screen, or displaying the third AOD interface on the screen after entering the preset time period, or activating the rear screen camera or the main screen camera and displaying the third AOD interface on the screen when the rear screen camera or the main screen camera captures an image comprising a human eye and/or a human face, wherein the screen comprises the rear screen and the main screen whose orientations are the same.

7. The method according to any one of claims 1 to 6, wherein
before the detecting a first screen doze operation,
if the electronic device is in a screen-off state, the first screen doze operation comprises an operation of touching the screen;
if the electronic device is in a screen-on state, the screen doze operation comprises a screen lock operation; or
if the electronic device is in a power-off state, the first screen doze operation comprises a power-on operation.

8. The method according to any one of claims 1 to 7, wherein
an icon in the first AOD interface comprises only a first icon;
an icon in the second AOD interface comprises only the first icon; and
a size of the first icon in the first AOD interface is equal to a size of the first icon in the second AOD interface.

9. The method according to any one of claims 1 to 7, wherein
the first AOD interface comprises a first icon and a second icon;
the second AOD interface comprises the first icon and the second icon; and
sizes of the first icon and the second icon in the first AOD interface are smaller than sizes of the first icon and the second icon in the second AOD interface.

10. The method according to any one of claims 1 to 7, wherein
the first AOD interface comprises a third icon;
the second AOD interface comprises the third icon; and
a size of the third icon in the first AOD interface is smaller than a size of the third icon in the second AOD interface.

11. The method according to any one of claims 1 to 10, wherein
a text in the first AOD interface comprises only a first text;
a text in the second AOD interface comprises only the first text; and
a size of the first text in the first AOD interface is equal to a size of the first text in the second AOD interface.

12. The method according to any one of claims 1 to 10, wherein
the first AOD interface comprises the first text and the second text;
the second AOD interface comprises the first text and the second text; and
sizes of the first text and the second text in the first AOD interface are smaller than sizes of the first text and the second text in the second AOD interface.

13. The method according to any one of claims 1 to 7, wherein
the first AOD interface comprises a fourth icon;
the second AOD interface comprises a fifth icon; and
the fourth icon and the fifth icon belong to a same theme.

14. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13.

15. A computer-readable storage medium, wherein the computer-readable storage medium comprises computer instructions, and when run on an electronic device, the electronic device is enabled to perform the method according to any one of claims 1 to 13.
